(19) Europäisches Patentamt
European Patent Office
Office européen des brevets

(11) EP 3 971 239 B1

(12) **EUROPEAN PATENT SPECIFICATION**

(45) Date of publication and mention of the grant of the patent:
**13.11.2024 Bulletin 2024/46**

(21) Application number: **20810735.9**

(22) Date of filing: **15.05.2020**

(51) International Patent Classification (IPC):
***C08K 7/14*** *(2006.01)* ***C08L 53/00*** *(2006.01)*
***C08L 81/02*** *(2006.01)* ***C08L 71/12*** *(2006.01)*
***C08K 3/22*** *(2006.01)* ***C08L 23/12*** *(2006.01)*
***C08K 3/26*** *(2006.01)* ***C08L 53/02*** *(2006.01)*

(52) Cooperative Patent Classification (CPC):
(C-Sets available)
**C08L 23/12; C08L 53/025;** C08K 2003/267;
C08K 2201/005; C08L 2205/08 (Cont.)

(86) International application number:
**PCT/JP2020/019497**

(87) International publication number:
**WO 2020/235498 (26.11.2020 Gazette 2020/48)**

(54) **RESIN COMPOSITION AND MOLDED ARTICLE**

HARZZUSAMMENSETZUNG UND FORMARTIKEL

COMPOSITION DE RÉSINE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2019 JP 2019093856**

(43) Date of publication of application:
**23.03.2022 Bulletin 2022/12**

(73) Proprietor: **Asahi Kasei Kabushiki Kaisha**
**Tokyo 1000006 (JP)**

(72) Inventors:
- **TOKUYAMA, Miki**
  **Tokyo 100-0006 (JP)**
- **INAGAKI, Nozomi**
  **Tokyo 100-0006 (JP)**
- **YAMAMOTO, Mihoko**
  **Tokyo 100-0006 (JP)**

(74) Representative: **Strehl Schübel-Hopf & Partner**
**Maximilianstrasse 54**
**80538 München (DE)**

(56) References cited:
**EP-A1- 1 148 097**
**WO-A1-2007/138177**
**JP-A- 2002 348 485**
**JP-A- 2005 146 267**
**JP-A- 2007 045 957**
**JP-A- 2010 084 044**
**JP-A- 2011 168 676**
**JP-A- 2015 218 285**
**JP-A- 2016 053 116**
**JP-A- 2016 172 842**
**JP-A- 2017 111 920**
**JP-A- 2017 137 380**
**JP-A- 2018 035 218**
**JP-A- H0 314 853**
**JP-A- H02 300 588**
**JP-A- S61 174 270**
**JP-A- S62 179 530**
**US-A- 4 675 356**
**US-A- 4 704 423**
**US-A- 4 863 997**
**US-A1- 2018 057 671**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 71/123, C08L 53/025,**
**C08K 7/14, C08K 3/26;**
**C08L 53/025, C08L 23/12, C08L 71/12;**
**C08L 71/12, C08K 3/346, C08K 7/14, C08L 23/12,**
**C08L 23/26**

**Description**

TECHNICAL FIELD

This disclosure relates to a resin composition and a molded product.

BACKGROUND

A polypropylene resin is excellent in properties such as molding processability, water resistance, oil resistance, acid resistance and alkali resistance, but it has disadvantages of being inferior in heat resistance, rigidity, and impact resistance. Therefore, a polyphenylene ether resin is blended with the polypropylene resin so that the polypropylene resin forms a matrix and the polyphenylene ether resin forms dispersed particles, thereby producing a resin composition with improved heat resistance and rigidity.

Examples of prior art include US 3361851 A (PTL 1), which describes that solvent resistance and impact resistance are improved by blending polyphenylene ether with polyolefin, and US 4383082 A (PTL 2) and EP 0115712 A (PTL 3), which describe impact resistance is improved by blending polyphenylene ether with polyolefin and hydrogenated block copolymers.

Further, JP S63-113058 A, JP S63-225642 A, US 4863997 A, JP H03-72512 A, JP H04-183748 A and JP H05-320471 A (PTLS 4 to 9) describe that a specific hydrogenated block copolymer is blended with a resin composition containing a polyolefin resin and a polyphenylene ether resin to obtain a resin composition having excellent chemical resistance and processability.

CITATION LIST

Patent Literature

PTL 1: US 3361851 A
PTL 2: US 4383082 A
PTL 3: EP 0115712 A
PTL 4: JP S63-113058 A
PTL 5: JP S63-225642 A
PTL 6: US 4863997 A
PTL 7: JP H03-72512 A
PTL 8: JP H04-183748 A
PTL 9: JP H05-320471 A

SUMMARY

(Technical Problem)

Alloy materials of polypropylene and polyphenylene ether resins are used for automobile parts and plumbing parts. Because plumbing parts are expected to be used under water pressure and at high temperatures, they are required to have heat resistance, water resistance, impact resistance, rigidity, and vibration fatigue characteristics, and an inorganic filler reinforcing material is desired.

However, although the alloy materials of polypropylene and polyphenylene ether resins have excellent water resistance, it has been found that the interface between an inorganic filler and a resin is weak against water and acid, and the physical properties deteriorate when immersed in water and acid.

That is, the conventional polypropylene/polyphenylene ether resin compositions as proposed in PTLS 1 to 9 have a problem in terms of water resistance when glass fiber is added.

It could thus be helpful to provide a polypropylene/polyphenylene ether resin composition having excellent water resistance even when an inorganic filler is added.

EP 1 148 097 A1 discloses a resin composition containing a polyphenylene ether resin, a polypropylene resin, a hydrogenated block copolymer as a compatibilizer, an additive or filler, such as glass beads and hydrotalcite.

US 2018/057671 A1 discloses a resin composition comprising a polyphenylene ether resin, a polypropylene resin, a compatibilizer and an additive such as glass fibers.

JP 2016-172842 A, JP 2016-53116 A, JP 2015-218285 A and JP 2017-137380 A disclose resin compositions

comprising a polyphenylene ether-based resin, a hydrogenated block copolymer comprising a styrene block and a butadiene block and an inorganic filler.

US 4 675 423 A discloses a hydrotalcite solid solution and the use of hydrotalcite to improve properties, such as heat stability and water resistance, of synthetic resins.

(Solution to Problem)

As a result of diligent studies on the above problems, we found that adding a hydrotalcite-like compound to a polypropylene/polyphenylene ether composition alleviates the deterioration of physical properties in water when an inorganic filler is added, so that excellent water resistance can be obtained even when an inorganic filler is added, which was not achieved in prior art, thereby completing the present disclosure.

The present invention is set out in the appended claims.

(Advantageous Effect)

According to the present disclosure, it is possible to obtain a polypropylene/polyphenylene ether resin composition having excellent water resistance even when an inorganic filler is added.

BRIEF DESCRIPTION OF THE DRAWINGS

In the accompanying drawings:

FIG. 1 is an image of the resin composition of Example 2 observed by TEM, where in 10 or more of 100 phases containing a component (a), a linear phase containing (c) a compatibilizer having a length of 75 nm or more is dispersed by being contained inside the phase containing the component (a);
FIG. 2 is an image of the resin composition of Example 24 observed by TEM, where in 10 or more of 100 phases containing a component (a), a linear phase containing (c) a compatibilizer having a length of 75 nm or more is dispersed by being contained inside the phase containing the component (a);
FIG. 3 is an image of the resin composition of Comparative Example 19 observed by TEM, where in 10 or more of 100 phases containing a component (a), a linear phase containing (c) a compatibilizer having a length of 75 nm or more is dispersed by not being contained inside the phase containing the component (a); and
FIG. 4 is an image of the resin composition of Comparative Example 3 observed by TEM, where in 10 or more of 100 phases containing a component (a), a linear phase containing (c) a compatibilizer having a length of 75 nm or more is dispersed by not being contained inside the phase containing the component (a).

DETAILED DESCRIPTION

The following provides a detailed description of an embodiment of the present disclosure (hereinafter, also referred to as the "present embodiment"). However, the present disclosure is not limited to the following embodiment and may be implemented with various alterations that are within the essential scope of the claims.

[Resin composition]

A resin composition of the present embodiment is a composition containing (a) a polyphenylene ether resin, (b) polypropylene, (c) a compatibilizer, (d) an inorganic filler described below, and (e) a hydrotalcite-like compound described below.

By having the above constitution, the resin composition of the present embodiment can be a polypropylene/polyphenylene ether resin composition having excellent water resistance even when an inorganic filler is added. Further, it is possible to obtain a molded product achieving water resistance, heat resistance, impact resistance, rigidity, and vibration fatigue characteristics at the same time.

[(a) Polyphenylene ether resin]

In the present embodiment, specific examples of the (a) polyphenylene ether resin include poly (2,6-dimethyl-1,4-phenylene ether), poly (2-methyl-6-ethyl-1,4-phenylene ether), poly (2-methyl-6-phenyl-1,4-phenylene ether), poly (2,6-dichloro-1,4-phenylene ether), and polyphenylene ether copolymers such as a copolymer of 2,6-dimethylphenol and other phenols (for example, the copolymer of 2,3,6-trimethylphenol or the copolymer of 2-methyl-6-butylphenol as described in JP S52-17880 B). Among these, polyphenylene ethers such as poly (2,6-dimethyl-1,4-phenylene ether), a

copolymer of 2,6-dimethylphenol and 2,3,6-trimethylphenol, or a mixture of these are particularly preferred.

A method of producing the component (a) is not particularly limited as long as it can be obtained with a known method, and examples thereof include the production methods described in US 3306874 A, US 3306875 A, US 3257357 A, US 3257358 A, JP S50-51197 A, JP S52-17880 B, and JP S63-152628 B.

In the present embodiment, the lower limit of the range of the reduced viscosity of the component (a) (which is measured with 0.5 g/dL chloroform solution at 30 °C using Ubbelohde-type viscometer) is preferably 0.30 dL/g, more preferably 0. 032 dL/g, and still more preferably 0.035 dL/g. The upper limit of the range of the reduced viscosity is preferably 0.80 dL/g, more preferably 0.75 dL/g, and still more preferably 0.55 dL/g. When the reduced viscosity of the (a) polyphenylene ether is within this range, excellent properties such as impact resistance and heat resistance can be obtained, which is preferable.

In the present embodiment, the component (a) may be a mixture of two or more kinds of polyphenylene ethers with different reduced viscosities.

Further, various known stabilizers can also be preferably used to stabilize the polyphenylene ether. Examples of the stabilizer include metal stabilizers such as zinc oxide and zinc sulfide, and organic stabilizers such as hindered phenol stabilizers, phosphorus stabilizers, and hindered amine stabilizers. These stabilizers are preferably blended in an amount of less than 5 parts by mass with respect to 100 parts by mass of the component (a).

Furthermore, a known additive or the like, which can be added to polyphenylene ether, may also be added in an amount of less than 10 parts by mass with respect to 100 parts by mass of the component (a).

[(b) Polypropylene resin]

The (b) polypropylene resin is not particularly limited, and examples thereof include homopolymers and/or copolymers having propylene as a repeating unit structure. It is preferably a crystalline propylene homopolymer, crystalline propylene-ethylene block copolymer, or a mixture of crystalline propylene homopolymer and crystalline propylene-ethylene block copolymer.

The crystalline propylene-ethylene block copolymer is not particularly limited, and examples thereof include those having a crystalline propylene homopolymer moiety and a propylene-ethylene random copolymer moiety.

From the viewpoint of suppressing drawdown during combustion and improving the balance between fluidity and mechanical strength of the resin composition, the melt mass flow rate (hereinafter, also referred to as "MFR") of the component (b) is preferably 0.1 g/10 min or higher, more preferably 0.3 g/10 min or higher, and particularly preferably 0.5 g/10 min or higher. The MFR is preferably 15 g/10 min or lower, more preferably 6 g/10 min or lower, and particularly preferably 3 g/10 min or lower.

The MFR can be measured under conditions of a temperature of 230 °C and a load of 2.16 kg according to ISO1133. Specifically, the MFR can be measured with the method described in the Examples section below.

A method of producing the component (b) is not particularly limited, and a known method may be used. Specific examples of the method of producing the component (b) include a method of polymerizing propylene under conditions of a temperature of 0 °C to 100 °C and a pressure of 3 atm to 100 atm in the presence of a polymerization catalyst composition containing an aluminum alkyl compound and a titanium trichloride catalyst or a titanium halide catalyst supported on a carrier such as magnesium chloride. In the method, a chain transfer agent such as hydrogen may be added to adjust the molecular weight of the polymer.

In the method, the polymerization system can further include an electron donating compound as an internal donor component or an external donor component in addition to the above-described polymerization catalyst composition, so that the isotacticity of the obtained polypropylene and the polymerization activity of the polymerization system can be enhanced. These electron donating compounds are not particularly limited, and known ones may be used. Specific examples of the electron donating compound include ester compounds such as ε-caprolactone, methyl methacrylate, ethyl benzoate, and methyl toluate; phosphite esters such as triphenyl phosphite and tributyl phosphite; phosphoric acid derivatives such as hexamethylphosphoric triamide; alkoxy ester compounds; aromatic monocarboxylic acid esters; aromatic alkylalkoxysilanes; aliphatic hydrocarbon alkoxysilanes; various ether compounds; various alcohols; and various phenols.

In the method, the polymerization manner may be either a batch manner or a continuous manner, and the polymerization method may be a solution polymerization method or a slurry polymerization method using a solvent such as butane, pentane, hexane, heptane and octane, or a bulk polymerization method in a monomer or a gas phase polymerization method in a gaseous polymer without solvent, or the like.

Among the methods of producing the component (b), a method of producing the crystalline propylene-ethylene block copolymer is not particularly limited. Examples thereof include a method including a first step of obtaining a crystalline propylene homopolymer moiety, and a second step of obtaining a propylene-ethylene block copolymer moiety bonded to the crystalline propylene homopolymer moiety by copolymerizing the crystalline propylene homopolymer moiety with ethylene and other α-olefin added as necessary. As used herein, the other α-olefin is not particularly limited,

and examples thereof include propylene, 1-butene, and 1-hexene.

From the viewpoint of the impact resistance and the production stability of the resin composition, the total content of the component (a) and the component (b) in the present embodiment is 30 mass% or more, preferably 35 mass% or more and more preferably 40 mass% or more, and 80 mass% or less, preferably 75 mass% or less and more preferably 70 mass% or less with the resin composition of the present embodiment being 100 mass%.

[Ratio between content of (a) polyphenylene ether resin and content of (b) polypropylene]

In the present embodiment, a ratio between the content of the component (a) and the content of the component (b) is preferably as follows: the content of the component (a) is 10 parts by mass to 70 parts by mass and the content of the component (b) is 30 parts by mass to 90 parts by mass with the total amount of the component (a) and the component (b) being 100 parts by mass. It is more preferably that the content of the component (a) be 10 parts by mass to 60 parts by mass and the content of the component (b) be 40 parts by mass to 90 parts by mass. It is still more preferably that the content of the component (a) be in a range of 10 parts by mass to 50 parts by mass and the content of the component (b) be in a range of 50 parts by mass to 90 parts by mass. When the ratio between the content of the component (a) and the content of the component (b) is in these ranges, the balance between impact resistance, heat resistance and tensile strength is excellent, which is preferable.

These ratios in the resin composition can be determined with a calibration curve method using Fourier transform infrared spectroscopy (FT-IR).

[(c) Compatibilizer]

By containing (c) a compatibilizer, the resin composition of the present embodiment can form a matrix phase containing the component (b) and a dispersed phase containing the component (a). In this way, the heat-resistant creeping properties of the obtained resin composition can be further improved.

The component (c) is preferably a copolymer containing a segment block chain having high compatibility with the component (a) and a segment block chain having high compatibility with the component (b). The high compatibility means that the phases do not separate.

Examples of the segment block chain having high compatibility with the component (a) include a polystyrene block chain and a polyphenylene ether block chain.

Examples of the segment block chain having high compatibility with the component (b) include a polyolefin block chain and a copolymer elastomer block chain of ethylene and $\alpha$-olefin.

In this specification, the component (c) is not included in the scope of the component (a) or the scope the component (b).

Examples of the component (c) include at least one selected from the group consisting of a hydrogenated block copolymer, a copolymer having polystyrene block chain-polyolefin block chain, and a copolymer having polyphenylene ether block chain-polyolefin block chain. Among these, a hydrogenated block copolymer is preferable from the viewpoint of better thermal stability. The component (c) may be used alone or in combination of two or more.

Examples of the hydrogenated block copolymer include a hydrogenated block copolymer in which at least a part of a block copolymer is hydrogenated, where the block copolymer contains a polymer block a mainly composed of a vinyl aromatic compound and a polymer block b mainly composed of a conjugated diene compound.

A preferred specific example of the hydrogenated block copolymer is a hydrogenated block copolymer containing a polymer block a mainly composed of a vinyl aromatic compound and a polymer block b mainly composed of a conjugated diene compound in which the total amount of 1,2-vinyl bond and 3,4-vinyl bond is 30 % to 90 %. From the viewpoints of the compatibility with the polyphenylene ether resin and the vibration fatigue characteristics, the total amount of 1,2-vinyl bond and 3,4-vinyl bond of the conjugated diene compound in the polymer block b is preferably 30 % to 90 %.

The polymer block a is preferably a homopolymer block of a vinyl aromatic compound, or a copolymer block of a vinyl aromatic compound and a conjugated diene compound.

The polymer block a being "mainly composed of a vinyl aromatic compound" means that the polymer block a contains more than 50 mass% of a vinyl aromatic compound unit. Further, from the viewpoint of better molding fluidity, impact resistance, weld and appearance, the polymer block a preferably contains 70 mass% or more of a vinyl aromatic compound unit.

Examples of the vinyl aromatic compound in the polymer block a include styrene, $\alpha$-methylstyrene, vinyltoluene, p-tert-butylstyrene, and diphenylethylene, among which styrene is preferable.

These may be used alone or in combination of two or more.

The number average molecular weight of the polymer block a is not particularly limited, but it is preferably 15,000 or more. Further, it is preferably 50,000 or less. When the number average molecular weight of the polymer block a is within the above ranges, the impact resistance of the resin composition of the present embodiment can be further

improved.

The number average molecular weight of the polymer block a can be measured by GPC (mobile phase: chloroform, standard substance: polystyrene).

The polymer block b is preferably a homopolymer block of a conjugated diene compound, or a random copolymer block of a conjugated diene compound and a vinyl aromatic compound.

The polymer block b being "mainly composed of a conjugated diene compound" means that the polymer block b contains more than 50 mass% of a conjugated diene compound unit. Further, from the viewpoint of better molding fluidity, impact resistance, weld and appearance, the polymer block b preferably contains 70 mass% or more of a conjugated diene compound unit.

Examples of the conjugated diene compound in the polymer block b include butadiene, isoprene, 1,3-pentadiene, and 2,3-dimethyl-1,3-butadiene, among which butadiene, isoprene and combinations thereof are preferable.

These may be used alone or in combination of two or more.

With regard to the microstructure of the polymer block b (bonding form of the conjugated diene compound), the total amount of 1,2-vinyl bond and 3,4-vinyl bond (hereinafter, also referred to as "total vinyl bond amount") is preferably 30 % to 90 %, more preferably 45 % to 90 %, and still more preferably 65 % to 90%, with respect to the total amount of vinyl bond contained in the conjugated diene compound forming the polymer block.

When the total vinyl bond amount of the conjugated diene compound in the polymer block b is within the above ranges, the compatibility with the polypropylene resin is further improved. In particular, when the total vinyl bond amount is 30 % or more, the dispersibility of the component (a) in the resin composition can be further improved. When the total vinyl bond amount is 90 % or less, excellent economic efficiency is obtained while maintaining excellent dispersibility of the component (a).

In particular, when the polymer block b is a polymer block mainly composed of butadiene, the total vinyl bond amount of butadiene in the polymer block b is preferably 65 % to 90 %.

The total vinyl bond amount can be measured by an infrared spectrophotometer. A calculation method is according to the one described in Analytical Chemistry, Volume 21, No. 8, August, 1949.

The component (c) is preferably a hydrogenated block copolymer of a block copolymer containing at least the polymer block a and the polymer block b. When the polymer block a in the component (c) is indicated by "a" and the polymer block b is indicated by "b", examples of the component (c) include a hydrogenated compound of a vinyl aromatic compound-conjugated diene compound block copolymer having a structure such as a-b, a-b-a, b-a-b-a, (a-b-)4Si, and a-b-a-b-a. The "Si" in the "(a-b-)4Si" is a reaction residue of a polyfunctional coupling agent such as silicon tetrachloride or tin tetrachloride, a residue of an initiator such as a polyfunctional organolithium compound, or the like.

The molecular structure of the block copolymer containing the polymer block a and the polymer block b is not particularly limited and may be, for example, linear, branched, radial, or any combination thereof.

With regard to the polymer block a and the polymer block b, the distribution of the vinyl aromatic compound or the conjugated diene compound in the molecular chain in each polymer block may be random, tapered (where monomer components increase or decrease along the molecular chain), partially blocked, or any combination thereof.

When there are two or more of either the polymer block a or the polymer block b in a repeating unit, the two or more polymer blocks may have the same structure or different structures.

From the viewpoint of better molding fluidity, impact resistance, weld and appearance, the hydrogenated block copolymer of the component (c) preferably contains 20 mass% to 95 mass% of a structural unit derived from a vinyl aromatic compound contained in the block copolymer before hydrogenation. The lower limit of the content of the structural unit may be 30 mass% or more, 40 mass% or more, 50 mass% or more, or 60 mass% or more, and the upper limit may be 85 mass% or less, 75 mass% or less, 65 mass% or more, or 55 mass% or less.

The content of the structural unit derived from a vinyl aromatic compound can be measured by an ultraviolet spectrophotometer.

The number average molecular weight (Mn) of the block copolymer before hydrogenation is preferably 5,000 to 1,000,000. The lower limit of the number average molecular weight (Mn) may be 10,000 or more, 20,000 or more, 40,000 or more, or 60,000 or more, and the upper limit may be 800,000 or less, 500,000 or less, 200,000 or less, 100,000 or less, or 80,000 or less.

The number average molecular weight (Mn) can be measured by gel permeation chromatography (GPC, mobile phase: chloroform, standard substance: polystyrene).

The molecular weight distribution of the block copolymer before hydrogenation is preferably 10 or less. The molecular weight distribution can be calculated by determining a ratio (Mw/Mn) of the weight average molecular weight (Mw) to the number average molecular weight (Mn) measured by GPC (GPC, mobile phase: chloroform, standard substance: polystyrene).

The hydrogenation rate of double bond derived from the conjugated diene compound in the component (c) is not particularly limited, but it is preferably 50 % or more, more preferably 80 % or more, and still more preferably 90 % or more, from the viewpoint of better heat resistance.

The hydrogenation rate can be measured by NMR.

A method of producing the hydrogenated block copolymer of the component (c) is not particularly limited, and a known production method may be adopted. Examples thereof include the production methods described in JP S47-011486 A, JP S49-066743 A, JP S50-075651 A, JP S54-126255 A, JP S56-010542 A, JP S56-062847 A, JP S56-100840 A, JP H02-300218 A, GB 1130770 A, US 3281383 A, US 3639517 A, GB 1020720 A, US 3333024 A, and US 4501857 A.

The hydrogenated block copolymer of the component (c) may be a modified hydrogenated block copolymer in which the above-described hydrogenated block copolymer is grafted or added with α, β-unsaturated carboxylic acid or a derivative thereof (ester compound or acid anhydride compound).

The modified hydrogenated block copolymer may be obtained by reacting the above-described hydrogenated block copolymer with α, β-unsaturated carboxylic acid or a derivative thereof in a molten state, a solution state or a slurry state in a temperature range of 80 °C to 350 °C in the presence or absence of radical generator. In this case, it is preferable to graft or add the α, β-unsaturated carboxylic acid or a derivative thereof to the hydrogenated block copolymer at a ratio of 0.01 mass% to 10 mass%. Further, it may be a mixture in which the above-described hydrogenated block copolymer and the modified hydrogenated block copolymer are mixed in an arbitrary ratio.

From the viewpoint of the impact resistance of the resin composition, the content of the component (c) in the present embodiment is 2 mass% or more, preferably 5 mass% or more, and still more preferably 7 mass% or more, and 30 mass% or less, preferably 25 mass% or less, and still more preferably 15 mass% or less, with the resin composition of the present embodiment being 100 mass%.

[(d) Inorganic filler]

A surface-treated inorganic filler (d) (hereinafter, also simply referred to as component (d)) used in the present embodiment is surface-treated with a surface treatment agent containing an acid functional group. It is preferably a fibrous filler or a plate-like filler.

Examples of the fibrous filler include, but are not limited to, glass fiber, carbon fiber, whiskers such as potassium titanate whisker, and calcium silicate (wollastonite).

Examples of the plate-like filler include, but are not limited to, glass flake, mica, and talc.

Among the above fillers, glass fiber is most preferable from the viewpoint of rigidity and water resistance.

These may be used alone or in combination of two or more.

For the surface treatment for the inorganic filler a surface treatment agent containing an acid functional group is used from the viewpoint of water resistance.

Whether or not it contains an acid functional group can be determined by whether or not an acid-derived peak is detected when the surface treatment agent of the glass fiber is extracted in chloroform and measured by Py-GC/MS. In particular, it is more preferable to use glass fiber in which a carboxylic acid-derived peak is detected from the viewpoint of water resistance.

Examples of the acid contained in a compound containing an acid functional group include unsaturated carboxylic acid or a derivative thereof, where examples of the unsaturated carboxylic acid include maleic acid, fumaric acid, itaconic acid, acrylic acid, tetrahydrophthalic acid, citraconic acid, crotonic acid, and isocrotonic acid, and examples of a derivative thereof include anhydride, acid halide, amide, imide, and ester. Specific examples thereof include maleic anhydride, acetic anhydride, succinic anhydride, monomethyl maleate, dimethyl maleate, maleimide, and glycidyl maleate.

In a case where the inorganic filler is a fibrous filler, it has a fiber length of 2 mm or more when it is delivered from an inorganic filler manufacturer (before being kneaded by an extruder).

In a case where the inorganic filler is a fibrous filler, the average fiber diameter is preferably 20 μm or less from the viewpoint of water resistance, the average fiber diameter is more preferably 5 μm to 15 μm from the viewpoint of balance of mechanical characteristics and dimensional characteristics, and the average fiber diameter is most preferably 12 μm to 14 μm.

The average fiber diameter refers to the average fiber diameter for one fibrous filler measured by observing the fibrous fillers with a scanning electron microscope (SEM), and it may be the average of any 10 fibrous fillers.

In a case where the inorganic filler is a plate-shaped filler, a ratio (R/H) of the average plate diameter (R) to the average thickness (H) of the plate is preferably 5 or more, more preferably 10 or more, and particularly preferably 20 or more, from the viewpoint of sufficiently obtaining the reinforcing effect of the filler.

From the viewpoints of the melt fluidity, vibration fatigue characteristics and heat resistance of the resin composition, the surface appearance of a molded product, and the specific gravity of a molded product, the content of the component (d) is 5 mass% or more, preferably 7 mass% or more, and still more preferably 10 mass% or more, and less than 50 mass%, preferably 40 mass% or less, and still more preferably 35 mass% or less, with the resin composition of the present embodiment being 100 mass%.

[(e) Hydrotalcite-like compound]

The hydrotalcite-like compound may be hydrotalcites described in, for example, JP S60-1241 A and JP H09-59475 A, and is a hydrotalcite compound represented by the following formula:

$$[M^{2+}_{1-x}M^{3+}_{x}(OH)_2]^{x+}[A^{n-}_{x/n}\cdot mH_2O]^{x-}$$

(where $M^{2+}$ refers to divalent metal ions such as $Mg^{2+}$, $Mn^{2+}$, $Fe^{2+}$ and $Co^{2+}$, and $M^{3+}$ refers to trivalent metal ions such as $Al^{3+}$, $Fe^{3+}$ and $C^{3+}$; $A^{n-}$ refers to an anion of n-valent (particularly monovalent or divalent) such as $CO_3^{2-}$, OH , $HPO_4^{2-}$ and $SO_4^{2-}$; x is $0 < x < 0.5$; and m is $0 \leq m < 1$.)

The hydrotalcite-like compound may be natural or synthetic.

The hydrotalcite-like compound may be calcined hydrotalcite in which the amount of OH in the chemical structure is reduced by calcining.

Further, the hydrotalcite-like compound may be surface-treated.

By adding the hydrotalcite-like compound, the water resistance of the resin composition is greatly improved.

The hydrotalcite-like compound is available from Kyowa Chemical Industry Co., Ltd. as "DHT-4A", "DHT-4A-2", "ALCAMAIZER", "KW-2200" and the like.

The hydrotalcite-like compound is preferably uniformly dispersed in the resin. From the viewpoint of impact resistance, the average particle size of the hydrotalcite-like compound is preferably 1 nm or more and 2 μm or less, more preferably 1 nm or more and 1.5 μm or less, and still more preferably 1 nm or more and 1.0 μm or less.

The average particle size refers to the average particle size for one particle of the hydrotalcite-like compound, which is measured by observing a molded piece using a scanning electron microscope (SEM), and it may be a value obtained by averaging the average values of any 10 particles of the major axis and minor axis measured for each particle.

From the viewpoint of the water resistance and vibration fatigue characteristics of the resin composition, the content of the component (e) in the present embodiment is 0.01 mass% or more, preferably 0.03 mass% or more, and more preferably 0.05 mass% or more, and 20 mass% or less, preferably 15 mass% or less, and more preferably 5 mass% or less, with the resin composition of the present embodiment being 100 mass%.

[(f) Polyolefin modified with unsaturated carboxylic acid]

For the purpose of improving the adhesion between the filler described later and the polypropylene resin forming a matrix described above, a known modified polyolefin resin may be used in addition to the above-described polypropylene resin, where the modified polyolefin resin is obtained by reacting a polyolefin resin with an α, β-unsaturated carboxylic acid or a derivative thereof (where the α, β-unsaturated carboxylic acid or a derivative thereof is grafted or added by 0.01 weight% to 10 weight%) in the presence or absence of radical generator in a molten or solution state at a temperature of 30 °C to 350 °C, or a mixture in which the above-described polypropylene resin and the modified polyolefin resin are mixed in an arbitrary ratio may be used.

Examples of the polyolefin resin include polypropylene, polyethylene, and an ethylene-propylene copolymer, which is not particularly limited as long as it is a resin containing an olefin as a monomer.

Examples of the α, β-unsaturated carboxylic acid or a derivative thereof used as a modifier of the polyolefin resin include unsaturated carboxylic acids such as maleic acid, fumaric acid, itaconic acid, acrylic acid, tetrahydrophthalic acid, citraconic acid, crotonic acid, and isocrotonic acid. Examples of a derivative thereof include anhydride, acid halide, amide, imide, and ester. Specific examples thereof include maleic anhydride, monomethyl maleate, dimethyl maleate, maleimide, and glycidyl maleate. Among the above, anhydride is preferred, and maleic anhydride is particularly preferred.

A radical generator is usually an organic or inorganic peroxide, and examples thereof include t-butyl peroxybenzoate, t-butyl hydroperoxide, methyl ethyl ketone peroxide, potassium peroxide, and hydrogen peroxide.

The number average molecular weight (Mn) of the (f) polyolefin modified with unsaturated carboxylic acid is preferably 20,000 to 100,000, more preferably 25,000 to 95,000, and still more preferably 30,000 to 95,000.

The number average molecular weight (Mn) can be measured by gel permeation chromatography (GPC, mobile phase: chloroform, standard substance: polystyrene).

In the present embodiment, when the component (d) (inorganic filler) and the component (a) (polyphenylene ether resin) are easily adhered to each other, the resin composition exhibits excellent impact resistance and vibration fatigue characteristics.

However, the surface of the inorganic filler has low adhesive strength with resin or other substances. Even when the inorganic filler is uniformly mixed with the resin, the interface strength between the inorganic filler and the resin is extremely low, and the effect of improving the strength of the composition by adding the inorganic filler may not be sufficiently obtained.

To enhance the effect of improving the strength, it is desirable to bond the resin and the inorganic filler by a

chemical bond.

However, because the surface of the inorganic filler has extremely low chemical reactivity, it may be difficult to cause such a chemical reaction with the inorganic filler as it is.

Therefore, the inorganic filler is subjected to surface treatment while using the (f) polyolefin modified with unsaturated carboxylic acid in combination. In this way, the surface of the inorganic filler can be chemically bonded to the resin via the component (f), and the component (d) (inorganic filler) and the component (a) (polyphenylene ether resin) can be easily adhered to each other. As a result, the resin composition exhibits excellent impact resistance and vibration fatigue characteristics.

The inorganic filler and the surface treatment agent are easily decomposed in the presence of water, which may lead to deterioration in strength.

By adding the above-described hydrotalcite-like compound or using the component (d) containing an acid functional group-containing compound in the surface treatment agent, decomposition and deterioration of physical properties in the presence of water can be suppressed, and excellent impact resistance and vibration fatigue characteristics can be obtained.

In particular, the component (d) (inorganic filler) is preferably glass fiber from the viewpoint of strength and cost. In this case, the glass fiber is subjected to a silane coupling treatment in which a silane-based compound is reacted with Si-OH groups present on the surface of the glass fiber, which enables the chemical bond between the surface of the glass fiber and the resin via the component (f). When glass fiber is used, there is a problem that a product obtained by a condensation reaction between the Si-OH group and the silane-based compound is easily decomposed in the presence of water. As described above, this problem can be solved by adding the hydrotalcite-like compound or the component (d) containing an acid functional group-containing compound in the surface treatment agent.

From the viewpoint of the impact resistance and vibration fatigue characteristics of the resin composition, the content of the component (f) in the present embodiment is 0.1 mass% or more, preferably 0.2 mass% or more, and more preferably 0.5 mass% or more, and 20 mass% or less, preferably 15 mass% or less, and more preferably 10 mass% or less, with the resin composition of the present embodiment being 100 mass%.

[Phosphorus compound]

In the present embodiment, the resin composition may contain a phosphorus compound.

Examples of the phosphorus compound include organic phosphorus compounds, red phosphorus, and inorganic phosphates.

The organic phosphorus compound is not particularly limited as long as it is a phosphorus compound having an organic substituent (those having a P-C bond and a P-O-C bond are included in the present embodiment), and examples thereof include phosphate esters (hereinafter, also referred to as "phosphates"), phosphite esters (hereinafter, also referred to as "phosphites"), and phosphonites.

More specifically, examples of the phosphates include phosphate ester compounds such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, and hydroxyphenyl diphenyl phosphate, which are used as flame retardants; modified phosphate ester compounds obtained by modifying these phosphate ester compounds with various substituents; and various condensation-type condensed phosphate ester compounds.

Examples of the phosphites include phosphite esters such as trisnonylphenyl phosphite, triphenyl phosphite, tris (2,4-di-t-butylphenyl) phosphite, bis (2,4-di-t-butylphenyl) pentaerythritol-di-phosphite, bis (2,6-dit-butyl-4-methylphenyl) pentaerythritol-di-phosphite, and 3,9-bis (2,6-di-tert-butyl-4-methylphenoxy)-2,4,8,10-tetraoxa-3,9-diphosphaspiro [5,5] undecane, which are also used as phosphorus antioxidants.

Examples of the phosphonites include tetrakis (2,4-di-tert-butylphenyl) 4,4'-biphenylenediphosphonite, and tetrakis (2,4-di-tert-butyl-5 methylphenyl) 4,4'-biphenylenediphosphite.

In the present embodiment, from the viewpoint of water resistance and vibration fatigue characteristics, the phosphorus element contained in the resin composition is preferably 0.3 mass% or less, more preferably 0.2 mass% or less, and particularly preferably 0.1 mass% or less, with the resin composition being 100 mass%.

Examples of a method of measuring the phosphorus element content in the resin composition include a method in which 0.25 g of a pre-dried thermoplastic resin composition is precisely weighed in a fluororesin container in a clean room and added with sulfuric acid and nitric acid to obtain a decomposition liquid by performing acid decomposition under pressure in a microwave decomposition device, 25 mL of the decomposition solution is weighed and used as a measurement solution, and the measurement solution is measured with the absolute calibration method using an ICP mass spectrometer (where cobalt is used as an internal standard). More specifically, the phosphorus element content can be measured with the method described in the Examples section below.

[Coloring agent]

In the present embodiment, a method of coloring the resin composition is not particularly limited, and one or more coloring agents selected from known organic dyes and inorganic pigments can be used.

Examples of the organic dyes include azo pigments such as azo lake pigments, benzimidazolone pigments, diarylide pigments and condensed azo pigments, phthalocyanine pigments such as phthalocyanine blue and phthalocyanine green, condensed polycyclic pigments such as isoindolinone pigments, quinophthalone pigments, quinacridone pigments, perylene pigments, anthraquinone pigments, perinone pigments and dioxazine violet, azine pigments, and carbon black.

Among these, the carbon black preferably has a dibutyl phthalate (DBP) absorption amount of less than 250 mL/100 g and more preferably less than 150 mL/100 g and a nitrogen adsorption specific surface area of less than 900 $m^2/g$ and more preferably less than 400 $m^2/g$. When they are in the above ranges, a composition having particularly excellent colorability, mechanical strength, and flame retardance can be obtained. The DBP absorption amount and the nitrogen adsorption specific surface area used herein refer to values measured with the methods specified in ASTM D2414 and JIS K6217, respectively.

Examples of the azine pigments include Solvent Black 5 (C.I. 50415, CAS No. 11099-03-9), Solvent Black 7 (C.I. 50415: 1, CAS No. 8005-20-5/101357-15-7), and Acid Black 2 (C.I. 50420, CAS No. 8005-03-6/68510-98-5) in the color index.

Examples of the inorganic pigments include metal oxides other than iron oxide such as titanium oxide, zinc oxide and chromium oxide, and composite metal oxides such as titan yellow, cobalt blue, and ultramarine.

The amount of the colorant added is preferably 2 mass% or less for carbon black, 2 mass% or less for azine dyes, and 8 mass% or less for inorganic pigments, with the entire resin composition being 100 mass%. The amount is more preferably 1 mass% or less for carbon black, 1 mass% or less for azine dyes, and 5 mass% or less for inorganic pigments.

When the coloring agent is added in the above amounts, it is possible to maintain good balance between impact resistance and mechanical properties. Further, in a case of an application that requires flame retardancy, the coloring agent is preferably added in the above amounts from the viewpoint of flame retardancy.

[Other additives]

In the present embodiment, other inorganic fillers and additive components, in addition to the above-described components, may be added at any stage as necessary without impairing the effects of the present embodiment.

Examples of the additive components include other thermoplastic resins such as polyester and polyolefin, plasticizers (such as low-molecular weight polyolefin, polyethylene glycol, fatty acid esters), antistatic agents, nucleating agents, fluidity improvers, reinforcing agents, various peroxides, spreading agents, copper-based heat stabilizers, organic heat stabilizers typified by hindered phenol-based oxidative deterioration inhibitors, antioxidants, ultraviolet absorbers, and light stabilizers.

The specific amount of each of these components added is preferably 15 mass% or less, more preferably 13 mass% or less, and still more preferably 10 mass% or less, with the entire resin composition being 100 mass%.

[Morphology of resin composition]

From the viewpoint of developing chemical resistance, the morphology (dispersion form) in the resin composition of the present embodiment preferably has a component (b) phase as a matrix phase and a component (a) phase as a dispersed phase and more preferably has a component (b) phase as a matrix phase and a component (a) phase as a dispersed phase.

The component (a) phase contains the component (a). It may be composed of components containing the component (a) and the component (c) or composed of components containing the component (a), the component (c) and the component (d), or it may be composed of the component (a), for example.

The component (b) phase contains the component (b). It may be composed of components containing the component (b) and the component (d) or composed of components containing the component (b), the component (d) and the component (e), or it may be composed of the component (b).

The morphology of the resin composition can be observed with a transmission electron microscope (TEM) or the like.

In particular, the component (a) phase is preferably dispersed with an average minor axis diameter of 2 μm or less. Further, from the viewpoint of impact resistance, the component (a) phase is more preferably dispersed with an average minor axis diameter of 10 nm or more and 1 μm or less.

It is preferably dispersed with average major axis diameter/average minor axis diameter being 1 to 10.

The average minor axis diameter and the average major axis diameter can be determined by observation with a transmission electron microscope (TEM) or the like.

The component (c) may not only be contained in the component (a) phase, but also can have a morphology in which the component (a) phase is surrounded by the component (c). In the latter case, the component (a) contained in the component (a) phase can be more thermally stably dispersed, which is preferable from the viewpoint of impact resistance.

Further, from the viewpoint of impact resistance, it is preferable that, in 10 or more of 100 phases containing the component (a), a linear phase containing the component (c) having a length of 75 nm or more be dispersed in a state of being contained inside a phase containing the component (a). Although the reason why the impact resistance is improved by such a dispersed state is unclear, it is presumed that the impact resistance of the resin composition is improved by forming a morphology in which the component (c) having excellent impact resistance is contained in the component (a) phase having relatively inferior impact resistance.

As used herein, the linear phase containing the component (c) having a length of 75 nm or more contained inside a phase containing the component (a) means a linear phase that is dyed blacker than the component (a) in a TEM image obtained by observing with the component (b) and the component (c) stained with ruthenium tetroxide, which is a phase that is present in a phase containing the component (a) but is located in a position other than the interface between a phase containing the component (a) and a phase containing the component (b).

Among the dispersed phases, those containing the component (b) are excluded from the "linear phase containing the component (c) having a length of 75 nm or more contained inside a phase containing the component (a)", because the dispersed phases are fused with each other and there is a possibility that they are dyed blacker than the component (a).

Further, all the phases containing the component (c) that are not present at the interface between a phase containing the component (a) and a phase containing the component (b) are included in the above range. Even if the phase containing the component (c) is connected to a phase containing the component (c) that is present at the interface between a phase containing the component (a) and a phase containing the component (b), it is taken as the phase containing the component (c) contained inside a phase containing the component (a).

When measuring the length of the linear phase containing the component (c), the length of a phase containing the component (c) extending away from the interface is taken as the length of the phase containing the component (c) contained inside a phase containing the component (a), except for phases containing the component (c) that are present at the interface between a phase containing the component (a) and a phase containing the component (b).

The linear phase containing the component (c) may be formed by bending or branching, may draw an arc, may be split into two or more, or may be repeatedly connected. In this case, the total length of the phases containing the component (c) extending away from the interface in one phase containing the component (a) is taken as the length of the phase containing the component (c) contained inside a phase containing the component (a).

As a specific example, FIG. 1 illustrates a state in which, among 100 phases containing the component (a), 10 or more phases contain a linear phase containing the component (c) having a length of 75 nm or more. Note that FIG. 1 is an image of the resin composition of Example 2 described later.

FIG. 1 is an image obtained by using a TEM to observe the linear phase containing the component (c) contained inside a phase containing the component (a) in which the component (b) and the component (c) have been stained with ruthenium tetroxide. In FIG. 1, the portion dyed in light gray is a phase containing the component (a), the lightest portion is a phase containing the component (b), and the portion dyed in dark gray or black is a phase containing the component (c).

The length of the linear phase containing the component (c) is preferably 75 nm or more from the viewpoint of impact resistance.

Further, from the viewpoint of obtaining even better vibration fatigue characteristics, the width of the linear phase containing the component (c) contained inside a phase containing the component (a) is preferably 1 nm to 1000 nm and more preferably 1 nm to 500 nm.

The numerical value is an average value obtained by observing the linear (c) component present in any 100 dispersed component (a) phases in an image obtained by observing an arbitrary cross section of the resin composition by TEM.

Examples of a method of controlling the morphology as described above include a method of adjusting the vinyl content, structure of each block moiety and molecular weight of the component (c), a method of appropriately adjusting the molecular weight of the component (a), a method of adjusting the compounding ratio of the (a) polyphenylene ether resin and the (b) polypropylene resin, and a method of dividing the (b) polypropylene resin by a plurality of raw material supply ports and supplying the divided (b) polypropylene resin to an extruder. Among these, it is most effective to adjust the vinyl content and molecular weight of the component (c).

More specifically, when the vinyl content of the component (c) is increased, for example, the morphology tends to be suitable. However, if the vinyl content of the component (c) is too high, it may be necessary to adjust the amount added. When a ratio of the component (a) to the total of the (a) polyphenylene ether resin and the (b) polypropylene resin is too large, the component (a) becomes a matrix, which tends to lead to an unfavorable morphology.

Next, conditions for obtaining a morphology image and a method of processing the obtained image will be described.

After preparing an ultrathin section using an ultramicrotome, a test piece in which the component (b) and the component (c) has been stained with ruthenium tetroxide is photographed at a magnification of 10,000 times and an acceleration voltage of 100.0 kV using a transmission electron microscope (product name "HT7700", manufactured by Hitachi High-Tech Corporation). From the obtained observation image, a visual field containing 100 or more component (a) phases (dispersed phases) is selected.

Next, the obtained morphology image (printed paper) is captured by a scanner (device: RIKOH MPC5503, conditions: full-color photographic paper photograph, resolution: 300 dpi) and digitized. An image analysis software Image Pro10 is used to perform binarization processing (white/black) on the digitized image under the Auto conditions installed in Image Pro10. As described above, the (c) compatibilizer is relatively black compared to the (a) polyphenylene ether resin and the (b) polypropylene resin that are relatively white to gray, and therefore they can be identified.

From the obtained binarized image, 100 phases (dispersed phases) containing the component (a) are arbitrarily selected, the average major axis diameter and the average minor axis diameter of the phases containing the component (a) are measured, and the length and width of a phase containing the component (c) contained inside the phase containing the component (a) are measured.

In the present embodiment, the result of the measurement is a value obtained by averaging the results obtained from three morphology images.

Further, defects that occur in the measured cross section or the like (such as scratches made when the cross section is prepared by an ultramicrotome or the like, and voids inherent in the resin) may be reflected in the morphology image, but an area of the image to be binarized shall be selected so as not to include such a part.

The melt mass flow rate of the resin composition of the present embodiment is preferably 1 g/10 min to 20 g/10 min, more preferably 2 g/10 min to 20 g/10 min, and still more preferably 3 g/10 min to 20 g/10 min.

The melt mass flow rate is a value measured at 250 °C and a load of 10.0 kg according to ISO1133.

[Method of producing resin composition]

The resin composition of the present embodiment can be produced by melt-kneading the above-described components (a) to (e), and the component (f) and other components as necessary.

A method of producing the resin composition of the present embodiment is not particularly limited as long as the components (a) to (e), and the component (f) and other components as necessary can be melt-kneaded.

A suitable method of producing the resin composition of the present embodiment includes

a step (1-1) of melt-kneading all of the component (a) and all or a part of the component (b) and the component (c) to obtain a kneaded product,

a step (1-2) of adding the remainder of the component (b) and the component (c) to the kneaded product obtained in the step (1-1) (which excludes the case where all of the component (b) and the component (c) are used in the step (1-1)) and further melt-kneading the components to obtain a kneaded product, and

a step (1-3) of adding all of the component (d) to the kneaded product obtained in the step (1-2) and further melt-kneading the components.

A step of adding the component (e) may be any one of the step (1-1), step (1-2), and step (1-3), and the component (e) may be added once or dividedly. The same applies to the component (f).

A suitable method of producing the resin composition of the present embodiment may be a method of performing melt-kneading in multiple stages. The term "multi-stage" is not particularly limited as long as it has two or more stages.

For example, the method of the present embodiment includes,

in a first stage, a step of melt-kneading all of the component (a), a part of the component (b), all of the component (c), and all of the component (e) to obtain pellets, and

in a second stage, a step of adding the remainder of the component (b), the component (d), and the component (f) as necessary to the pellets obtained in the first stage, and further melt-kneading the components.

In this case, all of the component (b) may be added in the second stage.

Further, examples of a suitable method of producing the resin composition of the present embodiment include a masterbatch method in which a resin composition (masterbatch) containing specific components at high concentrations is prepared in advance, and then the masterbatch is diluted to obtain a resin composition containing each component at a desired concentration.

For example, the method of the present embodiment includes,

in a first stage, a step of melt-kneading all of the component (a), a part of the component (b), all of the component (c), and all of the component (d) to obtain masterbatch pellets containing the component (d) at a concentration higher than the concentration in a final composition, and

in a second stage, a step of adding the remainder of the component (b), and the component (f) as necessary to the masterbatch pellets and further melt-kneading the components to obtain a final composition.

In this case, all of the component (b) may be added in the second stage.

A melt-kneading machine preferably used for melt-kneading each component in the above-described production method is not particularly limited, and examples thereof include an extruder such as a single-screw extruder or a multi-screw extruder like a twin-screw extruder, and a heat melt-kneading machine using a roll, a kneader, a Brabender plastograph, a Banbury mixer or the like. In particular, a twin-screw extruder is preferable from the viewpoint of kneadability. Specific examples of the twin-screw extruder include the ZSK series manufactured by Coperion, the TEM series manufactured by Toshiba Machine Co., Ltd., and the TEX series manufactured by The Japan Steel Works, Ltd.

The following describes preferred embodiments when an extruder such as a single-screw extruder or a multi-screw extruder like a twin-screw extruder is used.

The type and standard of the extruder are not particularly limited and may be known ones.

The L/D (barrel effective length/barrel inner diameter) of the extruder is preferably 20 or more and more preferably 30 or more, and preferably 75 or less and more preferably 60 or less.

The extruder may be equipped with two or more different raw material supply ports, two or more vacuum vents, and one or more liquid addition pumps (which will be described later). With regard to the arrangement of these parts, it is more preferable to arrange a first raw material supply port on the upstream side in the direction of raw material flow, a first vacuum vent downstream of the first raw material supply port, a second raw material supply port downstream of the first vacuum vent, a liquid addition pump downstream of the second raw material supply port, and a second vacuum vent downstream of the liquid addition pump, from the viewpoint of impact resistance.

Further, a method of supplying raw materials at the second raw material supply port is not particularly limited. It may be a method of adding raw materials simply from an upper opening of the raw material supply port, or it may be a method of adding raw materials from a side opening using a forced side feeder. In particular, the method of adding raw materials from a side opening using a forced side feeder is preferable from the viewpoint of stable supply.

During the melt-kneading of each component, the melt-kneading temperature may usually be 270 °C to 320 °C.

In particular, the temperature between the first raw material supply port and the second raw material supply port is preferably 300 °C or higher and 320 °C or lower from the viewpoint of exhibiting the smoke generation properties and chemical resistance of the resin composition.

From the viewpoint of exhibiting the smoke generation properties and chemical resistance of the resin composition, the set temperature between the first raw material supply port and the second raw material supply port and the set temperature in a portion downstream of the second raw material supply port are preferably different. Specifically, it is preferable to set the temperature between the first raw material supply port and the second raw material supply port to 300 °C or higher and 320 °C or lower and to set the temperature of the portion downstream of the second raw material supply port to 270 °C or higher and lower than 300 °C.

The screw speed is not particularly limited and may usually be 100 rpm to 1200 rpm.

[Molded product]

A molded product of the present embodiment is made of the resin composition of the present embodiment described above.

The molded product of the resin composition of the present embodiment is not particularly limited, and examples thereof include automobile parts, interior/exterior parts of electric equipment, and other parts. The automobile parts are not particularly limited, and examples thereof include exterior parts such as bumper, fender, door panel, various moldings, emblem, engine hood, hubcap, roof, spoiler, and various aerodynamic parts; interior parts such as instrument panel, console box, and trim; secondary battery container parts installed in automobiles, electric vehicles, hybrid electric vehicles and the like; and lithium-ion secondary battery parts. The interior/exterior parts of electrical equipment are not particularly limited, and examples thereof include various computers and their peripherals, other OA equipment, cabinets of television, videocassette recorder, various disc players and the like, and parts used in chassis, refrigerator, air conditioner, and LCD projector. Examples of the other parts include electric wires/cables obtained by coating metal conductors or optical fibers, fuel cases for solid methanol batteries, water pipes of fuel cells, tanks for water cooling, exterior cases of boilers, peripheral parts/components of ink of inkjet printers, furniture (such as chairs), chassis, water pipes, and joints.

[Method of producing molded product]

The molded product of the present embodiment can be produced by molding the resin composition of the present embodiment described above.

A method of producing the molded product of the present embodiment is not particularly limited, and examples thereof include injection molding, extrusion molding, extrusion molding of odd shapes, hollow molding, and compression molding, among which injection molding is preferable from the viewpoint of more effectively obtaining the effect of the present embodiment.

EXAMPLES

The following describes the present embodiment with reference to examples, but the present embodiment is not limited to these examples.

Resin compositions and molded products of Examples and Comparative Examples used the following raw materials.

(a) Polyphenylene ether resin

(a-1) Polyphenylene ether resin obtained by oxidative polymerization of 2,6-xylenol
The reduced viscosity (measured with 0.5 g/dL chloroform solution at 30 °C) of the polyphenylene ether resin was 0.52 dL/g.
(a-2) Polyphenylene ether resin obtained by oxidative polymerization of 2,6-xylenol
The reduced viscosity (measured with 0.5 g/dL chloroform solution at 30 °C) of the polyphenylene ether resin was 0.40 dL/g.
(a-3) Polyphenylene ether resin obtained by oxidative polymerization of 2,6-xylenol

The reduced viscosity (measured with 0.5 g/dL chloroform solution at 30 °C) of the polyphenylene ether resin was 0.32 dL/g.

(b) Polypropylene

(b-1) Polypropylene homopolymer with MFR = 15 g/10 min
(b-2) Polypropylene homopolymer with MFR = 2 g/10 min
(b-3) Polypropylene homopolymer with MFR = 0.4 g/10 min

The MFR was measured under conditions of a temperature of 230 °C and a load of 2.16 kg in accordance with ISO1133.

(c) Compatibilizer

(c-1)

A block copolymer having a block structure of II-I-II-I was synthesized with a known method, where the polymer block I was made of polystyrene and the polymer block II was made of polybutadiene. Hydrogenation was performed on the synthesized block copolymer with a known method. No modification of polymer was performed. The physical properties of the obtained unmodified hydrogenated block copolymer are described below.

Polystyrene content in the block copolymer after hydrogenation: 44 mass%, number average molecular weight (Mn) of the block copolymer after hydrogenation: 95300, weight average molecular weight (Mw): 113600, amount of 1,2-vinyl bond (total vinyl bond amount) in the polybutadiene block after hydrogenation: 79 %, hydrogenation rate to the polybutadiene moiety forming the polybutadiene block: 99 %

(c-2)

A block copolymer having a block structure of II-I-II-I was synthesized with a known method, where the polymer

block I was made of polystyrene and the polymer block II was made of polybutadiene. Hydrogenation was performed on the synthesized block copolymer with a known method. No modification of polymer was performed. The physical properties of the obtained unmodified hydrogenated block copolymer are described below.

Polystyrene content in the block copolymer after hydrogenation: 66 mass%, number average molecular weight (Mn) of the block copolymer after hydrogenation: 57000, weight average molecular weight (Mw): 60400, amount of 1,2-vinyl bond (total vinyl bond amount) in the polybutadiene block after hydrogenation: 41 %, hydrogenation rate to the polybutadiene moiety forming the polybutadiene block: 99 %

(d) Inorganic filler

(d-1) Glass fiber having an average fiber diameter of 13 μm that had been surface-treated with a surface treatment agent containing an acid functional group. It was confirmed by measurement by Py-GC/MS that the surface treatment agent contained an acid functional group.
(d-2) Glass fiber having an average fiber diameter of 13 μm
(d-3) Glass fiber having an average fiber diameter of 10.5 μm

(e) Hydrotalcite-like compound

(e-1) DHT-4C hydrotalcite manufactured by Kyowa Chemical Industry Co., Ltd., $Mg_{4.5}Al_2(OH)_{13}CO_3 \cdot 3.5H_2O$ (representative structure), surface-treated with higher fatty acid, average particle size: 0.40 μm
(e-2) KW2200 calcined hydrotalcite manufactured by Kyowa Chemical Industry Co., Ltd., $Mg_{0.7}Al_{0.3}O_{1.15}$ (representative structure), average particle size: 0.45 μm

(f) Polyolefin modified with unsaturated carboxylic acid

(f-1) Polypropylene modified with maleic anhydride having a number average molecular weight (Mn) of 60,000 and a weight average molecular weight (Mw) of 91,000
(f-2) Polyethylene propylene modified with maleic anhydride having a number average molecular weight (Mn) of 32,000 and a weight average molecular weight (Mw) of 83,000

(Other component) Organophosphorus compound

Bisphenol A-based condensed phosphate ester: manufactured by DAIHACHI CHEMICAL INDUSTRY CO.,LTD., product name "CR-741", with the main component being the one where n = 1 (approximately 85 % by area ratio by liquid chromatography analysis, acid value = 0.01 KOH mg/g) in the following chemical formula

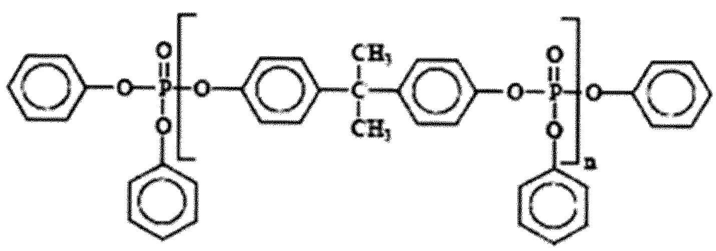

A twin-screw extruder (ZSK-25, manufactured by Coperion) was used as a melt-kneader for the production of resin compositions of each example and each comparative example. The L/D of the extruder was 35.

A first raw material supply port was provided on the upstream side in the direction of raw material flow, a second raw material supply port was provided downstream of the first raw material supply port, and a vacuum vent was provided downstream of the second raw material supply port. Further, raw materials were supplied to the second raw material supply port from a side opening of the extruder using a side feeder. Using the extruder that had been set as above, the (a) polyphenylene ether resin, the (b) polypropylene resin, the (c) compatibilizer, the (d) surface-treated inorganic filler,

the (e) hydrotalcite-like compound, and the (f) polyolefin modified with unsaturated carboxylic acid were blended as the composition listed in Table 1 and melt-kneaded under conditions of an extrusion temperature of 270 °C to 320 °C, a screw speed of 300 rpm, and a discharge rate of 20 kg/h to obtain pellets.

The resin pellets thus obtained were supplied to a small injection molding machine (product name: IS-100GN, manufactured by Toshiba Machine Co., Ltd.) set at 240 °C to 280 °C to prepare test pieces for each evaluation test described below under the condition of a molding temperature of 60 °C. JIS K7139-type A1 test pieces were prepared and allowed to stand in an environment of 80 °C for 24 hours using a gear oven to perform heat history processing. The test pieces were used as test pieces for impact resistance and water resistance measurement and test pieces for morphology observation.

In addition, No. III-type test pieces were prepared according to the cantilever bending test method of JIS-7119 for the evaluation of vibration fatigue characteristics.

(1) Morphology

An ultrathin section having a thickness of 80 nm was prepared from the obtained test piece for morphology observation with an ultramicrotome, the ultrathin section was stained with ruthenium tetroxide, and the obtained sample was observed using a TEM (HT7700, manufactured by Hitachi High-Tech Corporation) at a magnification of 10000 times.

In the observation image, the length of a phase containing the component (c) contained inside a phase containing the component (a) was measured with the method described above. A case where, in 10 or more of 100 phases containing the component (a), a linear phase containing the component (c) having a length of 75 nm or more was contained inside the phase containing the component (a) was evaluated as "yes", and a case that did not satisfy the above was evaluated as "no".

In addition, the average minor axis diameter of the phase containing the component (a) was determined in the observation image with the method described above. Those having an average minor axis diameter of 10 nm or more and 1 $\mu$m or less were evaluated as "yes", and those did not satisfy the above was evaluated as "no".

(2) Phosphorus element content

The surface of the obtained pellets of the resin composition was washed with pure water in a clean room. Next, 0.25 g of the pellets was weighed and used as a sample. The sample was placed in a decomposition container made of Teflon® (Teflon is a registered trademark in Japan, other countries, or both) and added with sulfuric acid and nitric acid, and acid decomposition was performed under pressure using a microwave decomposition device. Next, 25 mL of the decomposition solution was weighed and used as a measurement solution. The measurement solution was measured with the absolute calibration method using an ICP mass spectrometer (where cobalt was used as an internal standard), and component analysis was performed to calculate the phosphorus element content (mass%).

(3) Impact resistance

The test piece for impact resistance and water resistance measurement prepared by molding described above was cut to prepare a test piece without notch for Charpy impact strength measurement.

For the test piece for Charpy impact strength measurement, the Charpy impact strength (kJ/$m^2$) of the test piece was measured in accordance with JIS K7111-1/1eA.

The evaluation standard was that the higher the measured value was, the better the impact resistance was.

(4) Melt mass flow rate

The melt mass flow rate (g/10 min) of the obtained pellets of the resin composition was evaluated at 250 °C and a load of 10.0 kg according to ISO1133.

The evaluation standard was that the larger the measured value was, the better the fluidity was.

(5) Water resistance

The test piece for Charpy impact strength measurement was held at a constant temperature of 23 °C and in a constant humidity of 50 % for 24 hours and then subject to measurement in accordance with JIS K7111-1/leU, and a value obtained by measuring the Charpy impact strength (kJ/$m^2$) of the test piece without notch was defined as A (kJ/$m^2$).

Further, the test piece was placed in a pressure cooker (TPC-221 manufactured by ESPEC) at 130 °C and 100 % humidity for 350 hours and then taken out and held at a constant temperature of 23 °C and in a constant humidity of 50 % for 24 hours. Next, the test piece was subject to measurement in accordance with JIS K7111-1/leU, and a value

obtained by measuring the Charpy impact strength ($kJ/m^2$) of the test piece without notch was defined as B ($kJ/m^2$).

A physical property retention rate C (%) after being placed into the pressure cooker, which was taken an index of water resistance, was calculated by the following formula.

$$C = (A/B) \times 100$$

The evaluation standard was that the higher the measured value was, the better the water resistance was.

(6) Vibration fatigue characteristics

The JIS-7119-type No. III test piece for cantilever bending test prepared by molding describe above was subjected to a bending fatigue tester (product name: B70-TH, manufactured by Toyo Seiki Seisaku-sho, Ltd.) in accordance with JIS-7119. The number of vibrations (times) when the test piece broke was determined under conditions of temperature: 90 °C, frequency: 30 Hz, and load: 20 MPa. It was measured with n = 4, and the average value was indicated. In a case where the test piece did not break at 1,000,000 times or more, the test was interrupted, and it was indicated in the table of Examples as "not broken".

The evaluation standard was that the greater the number of vibrations until breakage occurred was, the better the vibration-resistant fatigue characteristics were.

(Examples 1 to 25 and Comparative Examples 1 to 23)

The physical properties of each example and each comparative example were tested with the above-described measurement methods (1) to (5).

The results are listed in Tables 1 and 2.

Note: Examples 2, 6, 7, 22 and 23 are not within the scope of claim 1.

Table 1-1

| | | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|
| Method of producing resin composition | Upstream supply port | Component (a-1) | Part by mass | 15 | | | | | | | | | | | 15 | |
| | | Component (a-2) | Part by mass | | 15 | 15 | 15 | 10 | 15 | 15 | 15 | 20 | 25 | 15 | | 15 |
| | | Component (a-3) | Part by mass | | | | | 10 | | | | | | | | |
| | | Component (b-1) | Part by mass | 5 | | | | | | | | | | | | |
| | | Component (b-2) | Part by mass | 5 | 10 | 10 | | 10 | 10 | 10 | 10 | 10 | 10 | 15 | 10 | 10 |
| | | Component (b-3) | Part by mass | | | | 10 | | | | | | | | | |
| | | Component (c-1) | Part by mass | 10 | 10 | | 10 | 10 | 10 | 10 | 10 | 10 | 11 | 11 | 10 | 15 |
| | | Component (c-2) | Part by mass | | | 10 | | | | | | | | | | |
| | | Other component (organophosphorus compound) | Part by mass | | | | | | | | | | | | | |
| | Midstream supply port | Component (b-1) | Part by mass | 15 | | | | | | | 15 | | | | | |
| | | Component (b-2) | Part by mass | 15 | 30 | 30 | | | 30 | 30 | 15 | 30 | 25 | 35 | 30 | 25 |
| | | Component (b-3) | Part by mass | | | | 30 | 30 | | | | | | | | |
| | | Component (e-1) | Part by mass | 0.1 | | 2 | 0.5 | 0.5 | 0.5 | 0.5 | 0.5 | 0.5 | 0.5 | 0.5 | 0.5 | 0.5 |
| | | Component (e-2) | Part by mass | | 1 | | | | | | | | | | | |
| | | Component (f-1) | Part by mass | 1 | 1 | | | | | | | | | | | |
| | | Component (f-2) | Part by mass | | | 1 | 1 | 1 | 1 | 1 | 1 | 2 | 2 | 1 | 5 | 1 |
| | Downstream supply port | Component (d-1) | Part by mass | 30 | 30 | 30 | 30 | 30 | | | 30 | 30 | 20 | 30 | 30 | 30 |
| | | Component (d-2) | Part by mass | | | | | | 30 | | | | | | | |
| | | Component (d-3) | Part by mass | | | | | | | 30 | | | | | | |
| Resin composition | | Component (a) | Part by mass | 15 | 15 | 15 | 15 | 20 | 15 | 15 | 15 | 20 | 25 | 15 | 15 | 15 |
| | | Component (b) | Part by mass | 40 | 40 | 40 | 40 | 40 | 40 | 40 | 40 | 40 | 35 | 50 | 40 | 35 |
| | | (a)/((a)+(b)) | % | 27% | 27% | 27% | 27% | 33% | 27% | 27% | 27% | 33% | 42% | 23% | 27% | 30% |
| Evaluation | In 10 or more of 100 component (a) phases, linear component (c) of 75 nm or more is contained | | - | Yes | Yes | No | Yes | Yes | Yes | Yes | Yes | Yes | Yes | Yes | Yes | Yes |
| | Average minor axis diameter of component (a) phase is 10 nm or more and 1 μm or less | | - | Yes | Yes | Yes | Yes | Yes | Yes | Yes | Yes | Yes | Yes | Yes | Yes | Yes |
| | Phosphorus element content | | mass% | <0.1 | <0.1 | <0.1 | <0.1 | <0.1 | <0.1 | <0.1 | <0.1 | <0.1 | <0.1 | <0.1 | <0.1 | <0.1 |
| | Impact resistance | | $KJ/m^2$ | 58 | 59 | 52 | 60 | 56 | 57 | 59 | 57 | 57 | 56 | 54 | 62 | 56 |
| | Melt mass flow rate | | g/10min | 11 | 9 | 9 | 7 | 11 | 12 | 9 | 11 | 9 | 8 | 9 | 8 | 7 |
| | Water resistance | | % | 52 | 60 | 65 | 56 | 54 | 48 | 41 | 57 | 55 | 56 | 57 | 57 | 56 |
| | Vibration fatigue characteristics | | ×1000 times | 2400 | 2000 | 5600 | 2200 | 2300 | 2000 | 1800 | 2000 | 2300 | 2400 | 2300 | 2400 | 2300 |

Table 1-2

| | | | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|---|
| Method of producing resin composition | Upstream supply port | Component (a-1) | Part by mass | | | | | | | | | | | | |
| | | Component (a-2) | Part by mass | 15 | 15 | 30 | 10 | 15 | 15 | 30 | 50 | 15 | 15 | 15 | 10 |
| | | Component (a-3) | Part by mass | | | | | | | | | | | | |
| | | Component (b-1) | Part by mass | | | | | | | | | | | | |
| | | Component (b-2) | Part by mass | 10 | 5 | 10 | 10 | 10 | 10 | 10 | 10 | 10 | 10 | 10 | 50 |
| | | Component (b-3) | Part by mass | | | | | | | | | | | | |
| | | Component (c-1) | Part by mass | 10 | 10 | 10 | 10 | 3 | 4 | 10 | 10 | 10 | | 10 | 10 |
| | | Component (c-2) | Part by mass | | | | | 7 | 6 | | | | 5 | | |
| | | Other component (organophosphorus compound) | Part by mass | | | | | | | | | | | | |
| | Midstream supply port | Component (b-1) | Part by mass | | | | | | | | | | | | |
| | | Component (b-2) | Part by mass | 27 | 35 | 25 | 35 | 30 | 30 | 25 | 30 | 30 | 30 | 30 | 30 |
| | | Component (b-3) | Part by mass | | | | | | | | | | | | |
| | | Component (e-1) | Part by mass | 2 | 0.5 | 0.5 | 0.5 | 0.5 | 0.5 | 10 | 0.5 | | | 2 | 0.5 |
| | | Component (e-2) | Part by mass | | | | | | | | | 1 | 1 | | |
| | | Component (f-1) | Part by mass | 2 | 1 | | | 1 | 1 | | 1 | | | | 1 |
| | | Component (f-2) | Part by mass | 2 | | 10 | 1 | | | 1 | | | | 1 | |
| | Downstream supply port | Component (d-1) | Part by mass | 30 | 30 | 30 | 30 | 30 | 30 | 30 | 30 | 30 | 30 | 30 | 30 |
| | | Component (d-2) | Part by mass | | | | | | | | | | | | |
| | | Component (d-3) | Part by mass | | | | | | | | | | | | |
| Resin composition | | Component (a) | Part by mass | 15 | 15 | 30 | 10 | 15 | 15 | 30 | 50 | 15 | 15 | 15 | 10 |
| | | Component (b) | Part by mass | 37 | 40 | 35 | 45 | 40 | 40 | 35 | 40 | 40 | 40 | 40 | 80 |
| | | (a)/((a)+(b)) | % | 29% | 27% | 46% | 18% | 27% | 27% | 46% | 56% | 27% | 27% | 27% | 11% |
| Evaluation | In 10 or more of 100 component (a) phases, linear component (c) of 75 nm or more is contained | | - | Yes | Yes | Yes | Yes | No | Yes | No | No | Yes | No | Yes | Yes |
| | Average minor axis diameter of component (a) phase is 10 nm or more and 1 μm or less | | - | Yes | Yes | Yes | Yes | Yes | Yes | Yes | No | Yes | Yes | Yes | Yes |
| | Phosphorus element content | | mass% | <0.1 | <0.1 | <0.1 | <0.1 | <0.1 | <0.1 | <0.1 | <0.1 | <0.1 | <0.1 | <0.1 | <0.1 |
| | Impact resistance | | $KJ/m^2$ | 62 | 50 | 63 | 53 | 54 | 57 | 57 | 50 | 36 | 28 | 58 | 65 |
| | Melt mass flow rate | | g/10min | 9 | 9 | 8 | 8 | 9 | 9 | 9 | 6 | 9 | 9 | 9 | 7 |
| | Water resistance | | % | 68 | 58 | 59 | 59 | 56 | 59 | 56 | 56 | 52 | 52 | 65 | 57 |
| | Vibration fatigue characteristics | | ×1000 times | 2200 | 2100 | 2600 | 2200 | 6000 | 5400 | 1800 | 2200 | 100 | 280 | 1900 | 1900 |

Table 2-1

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|---|
| Method of producing resin composition | Upstream supply port | Component (a-1) | Part by mass | 15 | | | | | | | | | | | 15 |
| | | Component (a-2) | Part by mass | | 15 | 15 | 15 | 10 | 15 | 15 | 15 | 20 | 25 | 15 | |
| | | Component (a-3) | Part by mass | | | | | 10 | | | | | | | |
| | | Component (b-1) | Part by mass | 5 | | | | | | | | | | | |
| | | Component (b-2) | Part by mass | 5 | 10 | 10 | | 10 | 10 | 10 | 10 | 10 | 10 | 15 | 10 |
| | | Component (b-3) | Part by mass | | | | 10 | | | | | | | | |
| | | Component (c-1) | Part by mass | 10 | 10 | | 10 | 10 | 10 | 10 | 10 | 10 | 11 | 11 | 10 |
| | | Component (c-2) | Part by mass | | | 10 | | | | | | | | | |
| | | Other component (organophosphorus compound) | Part by mass | | | | | | | | | | | | |
| | Midstream supply port | Component (b-1) | Part by mass | 15 | | | | | | | 15 | | | | |
| | | Component (b-2) | Part by mass | 15 | 30 | 30 | | | 30 | 30 | 15 | 30 | 25 | 35 | 30 |
| | | Component (b-3) | Part by mass | | | | 30 | 30 | | | | | | | |
| | | Component (e-1) | Part by mass | | | | | | | | | | | | |
| | | Component (e-2) | Part by mass | | | | | | | | | | | | |
| | | Component (f-1) | Part by mass | 1 | 1 | | | | | | | | | | |
| | | Component (f-2) | Part by mass | | | 1 | 1 | 1 | 1 | 1 | 1 | 2 | 2 | 1 | 5 |
| | Downstream supply port | Component (d-1) | Part by mass | 30 | 30 | 30 | 30 | 30 | | | 30 | 30 | 20 | 30 | 30 |
| | | Component (d-2) | Part by mass | | | | | | 30 | | | | | | |
| | | Component (d-3) | Part by mass | | | | | | | 30 | | | | | |
| Resin composition | Component (a) | | Part by mass | 15 | 15 | 15 | 15 | 20 | 15 | 15 | 15 | 20 | 25 | 15 | 15 |
| | Component (b) | | Part by mass | 40 | 40 | 40 | 40 | 40 | 40 | 40 | 40 | 40 | 35 | 50 | 40 |
| | (a)/((a)+(b)) | | % | 27% | 27% | 27% | 27% | 33% | 27% | 27% | 27% | 33% | 42% | 23% | 27% |
| Evaluation | In 10 or more of 100 component (a) phases, linear component (c) of 75 nm or more is contained | | - | Yes | Yes | No | Yes | Yes | Yes | Yes | Yes | Yes | Yes | Yes | Yes |
| | Average minor axis diameter of component (a) phase is 10 nm or more and 1 μm or less | | - | Yes | Yes | Yes | Yes | Yes | Yes | Yes | Yes | Yes | Yes | Yes | Yes |
| | Phosphorus element content | | mass% | <0.1 | <0.1 | <0.1 | <0.1 | <0.1 | <0.1 | <0.1 | <0.1 | <0.1 | <0.1 | <0.1 | <0.1 |
| | Impact resistance | | KJ/m$^2$ | 59 | 61 | 53 | 61 | 57 | 58 | 60 | 59 | 59 | 58 | 55 | 63 |
| | Melt mass flow rate | | g/10min | 11 | 10 | 10 | 8 | 11 | 12 | 10 | 11 | 9 | 8 | 9 | 8 |
| | Water resistance | | % | 35 | 32 | 30 | 33 | 34 | 12 | 15 | 35 | 35 | 32 | 30 | 35 |
| | Vibration fatigue characteristics | | ×1000 times | 2600 | 2900 | Not broken | 2400 | 2700 | 2300 | 200 | 2400 | 2500 | 2600 | 2400 | 2600 |

Table 2-2

| | | | | Comparative Example 13 | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 | Comparative Example 23 |
|---|---|---|---|---|---|---|---|---|---|---|---|---|---|---|
| Method of producing resin composition | Upstream supply port | Component (a-1) | Part by mass | | | | | | | | | | | 15 |
| | | Component (a-2) | Part by mass | 15 | 15 | 15 | 30 | 10 | 15 | 15 | 50 | 15 | 15 | |
| | | Component (a-3) | Part by mass | | | | | | | | | | | |
| | | Component (b-1) | Part by mass | | | | | | | | | | | 5 |
| | | Component (b-2) | Part by mass | 10 | 10 | 5 | 10 | 10 | 10 | 10 | 10 | 10 | 10 | 5 |
| | | Component (b-3) | Part by mass | | | | | | | | | | | |
| | | Component (c-1) | Part by mass | 15 | 10 | 10 | 10 | 10 | 3 | 4 | 10 | 10 | | 10 |
| | | Component (c-2) | Part by mass | | | | | | 7 | 6 | | | 5 | |
| | | Other component (organophosphorus compound) | Part by mass | | | | | | | | | | | 5 |
| | Midstream supply port | Component (b-1) | Part by mass | | | | | | | | | | | 15 |
| | | Component (b-2) | Part by mass | 25 | 27 | 35 | 25 | 35 | 30 | 30 | 30 | 30 | 30 | 15 |
| | | Component (b-3) | Part by mass | | | | | | | | | | | |
| | | Component (e-1) | Part by mass | | | | | | | | | | | |
| | | Component (e-2) | Part by mass | | | | | | | | | | | |
| | | Component (f-1) | Part by mass | | 2 | 1 | | | 1 | 1 | 1 | | | 1 |
| | | Component (f-2) | Part by mass | 1 | 2 | | 10 | 1 | | | | | | |
| | Downstream supply port | Component (d-1) | Part by mass | 30 | 30 | 30 | 30 | 30 | 30 | 30 | 30 | 30 | 30 | 30 |
| | | Component (d-2) | Part by mass | | | | | | | | | | | |
| | | Component (d-3) | Part by mass | | | | | | | | | | | |
| Resin composition | Component (a) | | Part by mass | 15 | 15 | 15 | 30 | 10 | 15 | 15 | 50 | 15 | 15 | 15 |
| | Component (b) | | Part by mass | 35 | 37 | 40 | 35 | 45 | 40 | 40 | 40 | 40 | 40 | 40 |
| | (a)/((a)+(b)) | | % | 30% | 29% | 27% | 46% | 18% | 27% | 27% | 56% | 27% | 27% | 27% |
| Evaluation | In 10 or more of 100 component (a) phases, linear component (c) of 75 nm or more is contained | | - | Yes | Yes | Yes | Yes | Yes | Yes | No | No | Yes | No | No |
| | Average minor axis diameter of component (a) phase is 10 nm or more and 1 μm or less | | - | Yes | Yes | Yes | Yes | Yes | Yes | Yes | No | Yes | Yes | Yes |
| | Phosphorus element content | | mass% | <0.1 | <0.1 | <0.1 | <0.1 | <0.1 | <0.1 | <0.1 | <0.1 | <0.1 | <0.1 | 0.43 |
| | Impact resistance | | $KJ/m^2$ | 56 | 65 | 50 | 64 | 54 | 55 | 58 | 51 | 36 | 28 | 58 |
| | Melt mass flow rate | | g/10min | 7 | 10 | 9 | 8 | 9 | 9 | 9 | 7 | 9 | 9 | 11 |
| | Water resistance | | % | 32 | 34 | 32 | 36 | 34 | 32 | 29 | 31 | 15 | 15 | 33 |
| | Vibration fatigue characteristics | | ×1000 times | 2300 | 2800 | 2200 | 2700 | 2200 | 6500 | 5700 | 2400 | 120 | 290 | 120 |

INDUSTRIAL APPLICABILITY

According to the present disclosure, it is possible to obtain a polypropylene/polyphenylene ether resin composition having excellent water resistance even when an inorganic filler is added.

## Claims

1. A resin composition comprising (a) a polyphenylene ether resin, (b) a polypropylene resin, (c) a compatibilizer, (d) an inorganic filler, and (e) a hydrotalcite-like compound, wherein

   the inorganic filler (d) contains an inorganic filler surface-treated with a surface treatment agent containing an acid functional group, and
   the hydrotalcite-like compound (e) is a hydrotalcite compound represented by the following formula:

   $$[M^{2+}_{1-x}M^{3+}_{x}(OH)_2]^{x+}[A^{n-}_{x/n}\cdot mH_2O]^{x-} ,$$

   wherein $M^{2+}$ refers to divalent metal ions such as $Mg^{2+}$, $Mn^{2+}$, $Fe^{2+}$ and $Co^{2+}$, and $M^{3+}$ refers to trivalent metal ions such as $Al^{3+}$, $Fe^{3+}$ and $C^{3+}$; $A^{n-}$ refers to an n-valent anion, particularly a monovalent or divalent anion, such as $CO_3^{2-}$, $OH^-$, $HPO_4^{2-}$ and $SO_4^{2-}$; x is $0 < x < 0.5$; and m is $0 \leq m < 1$.

2. The resin composition according to claim 1, further comprising (f) polyolefin modified with unsaturated carboxylic acid.

3. The resin composition according to claim 1 or 2, having a Charpy impact strength without notch, measured as described in the description, of 10 kJ/$m^2$ or more.

4. The resin composition according to any one of claims 1 to 3, wherein the (d) inorganic filler contains glass fiber.

5. The resin composition according to any one of claims 1 to 4, wherein the (d) inorganic filler contains a fibrous filler with a fiber diameter of 11 μm to 20 μm.

6. The resin composition according to any one of claims 1 to 5, wherein the (e) hydrotalcite-like compound has a particle size of 1 nm or more and 2 μm or less.

7. The resin composition according to any one of claims 1 to 6, wherein the (a) polyphenylene ether resin has a reduced viscosity of 0.35 dL/g or more.

8. The resin composition according to any one of claims 1 to 7, wherein the (c) compatibilizer is at least one selected from the group consisting of a hydrogenated block copolymer, a copolymer having polystyrene block chain-polyolefin block chain, and a copolymer having polyphenylene ether block chain-polyolefin block chain.

9. The resin composition according to any one of claims 1 to 8, wherein the (c) compatibilizer has a hydrogenation rate of 90 % or more.

10. The resin composition according to any one of claims 1 to 9, wherein an amount of vinyl bond contained in the (c) compatibilizer is more than 50 %.

11. The resin composition according to any one of claims 1 to 10, having a content of phosphorus element of 0.3 mass% or less.

12. The resin composition according to any one of claims 1 to 11, wherein a phase containing the (a) polyphenylene ether resin forms a dispersed phase, and a phase containing the (b) polypropylene resin forms a matrix phase.

13. The resin composition according to claim 12, wherein an average minor axis diameter of the phase containing the (a) polyphenylene ether resin is 10 nm or more and 1 μm or less.

14. The resin composition according to claim 12 or 13, wherein in 10 or more of 100 of the phases containing the (a) polyphenylene ether resin, a linear phase containing the (c) compatibilizer having a length of 75 nm or more is

contained inside the phase containing the (a) polyphenylene ether resin.

**15.** A molded product obtained by molding the resin composition according to any one of claims 1 to 14.

**16.** The molded product according to claim 15, which is an electric or electronic application part for automobiles, or a plumbing part.

**Patentansprüche**

**1.** Harzzusammensetzung, umfassend (a) ein Polyphenylenetherharz, (b) ein Polypropylenharz, (c) ein Kompatibilisierungsmittel, (d) einen anorganischen Füllstoff und (e) eine hydrotalcitartige Verbindung, wobei

der anorganische Füllstoff (d) einen anorganischen Füllstoff enthält, der mit einem Oberflächenbehandlungsmittel, das eine saure funktionelle Gruppe enthält, oberflächenbehandelt wurde, und
die hydrotalcitartige Verbindung (e) eine Hydrotalcitverbindung der folgenden Formel ist:

$$[M^{2+}_{1-x}M^{3+}_{x}(OH)_2]^{x+}[A^{n-}_{x/n}\cdot mH_2O]^{x-},$$

wobei $M^{2+}$ sich auf zweiwertige Metallionen wie $Mg^{2+}$, $Mn^{2+}$, $Fe^{2+}$ und $Co^{2+}$ bezieht und $M^{3+}$ sich auf dreiwertige Metallionen wie $Al^{3+}$, $Fe^{3+}$ und $C^{3+}$ bezieht; $A^{n-}$ sich auf ein n-wertiges Anion, insbesondere ein einwertiges oder zweiwertiges Anion, wie $CO_3^{2-}$, $OH^-$, $HPO_4^{2-}$ und $SO_4^{2-}$ bezieht; x $0 < x < 0.5$ ist; und m $0 \leq m < 1$ ist.

**2.** Harzzusammensetzung nach Anspruch 1, welche weiterhin (f) ein mit einer ungesättigten Carbonsäure modifiziertes Polyolefin umfasst.

**3.** Harzzusammensetzung nach Anspruch 1 oder 2, welches eine Charpy-Schlagzähigkeit ohne Kerbe, ermittelt wie in der Beschreibung beschrieben, von 10 $kJ/m^2$ oder mehr aufweist.

**4.** Harzzusammensetzung nach einem der Ansprüche 1 bis 3, wobei der anorganische Füllstoff (d) Glasfasern enthält.

**5.** Harzzusammensetzung nach einem der Ansprüche 1 bis 4, wobei der anorganische Füllstoff (d) einen faserförmigen Füllstoff mit einem Faserdurchmesser von 11 $\mu$m bis 20 $\mu$m enthält.

**6.** Harzzusammensetzung nach einem der Ansprüche 1 bis 5, wobei die (e) hydrotalcitartige Verbindung eine Teilchengröße von 1 nm oder mehr und 2 $\mu$m oder weniger aufweist.

**7.** Harzzusammensetzung nach einem der Ansprüche 1 bis 6, wobei das (a) Polyphenylenetherharz eine reduzierte Viskosität von 0,35 dl/g oder mehr aufweist.

**8.** Harzzusammensetzung nach einem der Ansprüche 1 bis 7, wobei das (c) Kompatibilitätsmittel mindestens eines ist, ausgewählt aus der Gruppe bestehend aus einem hydrierten Blockcopolymer, einem Copolymer mit Polystyrolblockkette-Polyolefinblockkette und einem Copolymer mit Polyphenylenetherblockkette-Polyolefinblockkette.

**9.** Harzzusammensetzung nach einem der Ansprüche 1 bis 8, wobei das (c) Kompatibilisierungsmittel einen Hydrierungsgrad von 90% oder mehr aufweist.

**10.** Harzzusammensetzung nach einem der Ansprüche 1 bis 9, wobei die in dem (c) Kompatibilisierungsmittel enthaltene Vinylbindungsmenge mehr als 50% ist.

**11.** Harzzusammensetzung nach einem der Ansprüche 1 bis 10, welche einen Gehalt an Phosphorelement von 0,3 Massen-% oder weniger aufweist.

**12.** Harzzusammensetzung nach einem der Ansprüche 1 bis 11, wobei eine das (a) Polyphenylenetherharz enthaltende Phase eine dispergierte Phase bildet ein das (b) Polypropylenharz enthaltende Phase eine Matrixphase bildet.

**13.** Harzzusammensetzung nach Anspruch 12, wobei der mittlere Durchmesser der kurzen Achse der das (a) Polyphenylenetherharz enthaltenden, Phase 10 nm oder mehr und 1 μm oder weniger ist.

**14.** Harzzusammensetzung nach Anspruch 12 oder 13, wobei in 10 oder mehr von 100 der das (a) Polyphenylenetherharz enthaltenden Phasen eine lineare Phase, die das (c) Kompatibilisierungsmittel mit einer Länge von 75 nm oder mehr enthält, innerhalb der das (a) Polyphenylenetherharz enthaltenden Phase enthalten ist.

**15.** Geformtes Produkt, erhalten durch Formen der Harzzusammensetzung nach einem der Ansprüche 1 bis 14.

**16.** Geformtes Produkt nach Anspruch 15, wobei es sich um ein ein elektrisches oder elektronisches Anwendungsteil für Kraftfahrzeuge oder ein Sanitärteil handelt.

**Revendications**

**1.** Composition de résine comprenant (a) une résine d'éther de polyphénylène, (b) une résine de polypropylène, (c) un agent de compatibilité, (d) une charge inorganique, et (e) un composé de type hydrotalcite, dans laquelle

la charge inorganique (d) contient une charge inorganique traitée en surface avec un agent de traitement de surface contenant un groupe fonctionnel acide, et
le composé de type hydrotalcite (e) est un composé d'hydrotalcite représenté par la formule suivante :

$$[M^{2+}_{1-x}M^{3+}_{x}(OH)_2]^{x+}[A^{n-}_{x/n}\cdot mH_2O]^{x-},$$

dans laquelle $M^{2+}$ fait référence à des ions de métal divalents tels que $Mg^{2+}$, $Mn^{2+}$, $Fe^{2+}$ et $Co^{2}$+, et $M^{3+}$ fait référence à des ions de métal trivalents tels que $Al^{3+}$, $Fe^{3+}$ et $C^{3+}$ ; $A^{n}$- fait référence à un anion n-valent, en particulier un anion monovalent ou divalent, tel que $CO_3^{2-}$, $OH^-$, $HPO_4^{2-}$ et $SO_4^{2-}$ ; x est $0 < x < 0,5$ ; et m est $0 \leq m < 1$.

**2.** Composition de résine selon la revendication 1, comprenant en outre (f) une polyoléfine modifiée par un acide carboxylique insaturé.

**3.** Composition de résine selon la revendication 1 ou 2, présentant une résistance au choc Charpy sans entaille, mesurée tel que décrit dans la description, de 10 kJ/$m^2$ ou plus.

**4.** Composition de résine selon l'une quelconque des revendications 1 à 3, dans laquelle la charge inorganique (d) contient une fibre de verre.

**5.** Composition de résine selon l'une quelconque des revendications 1 à 4, dans laquelle la charge inorganique (d) contient une charge fibreuse ayant un diamètre de fibre de 11 μm à 20 μm.

**6.** Composition de résine selon l'une quelconque des revendications 1 à 5, dans laquelle le composé de type hydrotalcite (e) présente une taille de particule de 1 nm ou plus et de 2 μm ou moins.

**7.** Composition de résine selon l'une quelconque des revendications 1 à 6, dans laquelle la résine d'éther de polyphénylène (a) présente une viscosité réduite de 0,35 dl/g ou plus.

**8.** Composition de résine selon l'une quelconque des revendications 1 à 7, dans laquelle l'agent de compatibilité (c) est au moins un choisi dans le groupe constitué d'un copolymère séquencé hydrogéné, d'un copolymère présentant une chaîne séquencée de polystyrène-chaîne séquencée de polyoléfine, et d'un copolymère présentant une chaîne séquencée d'éther de polyphénylène-chaîne séquencée de polyoléfine.

**9.** Composition de résine selon l'une quelconque des revendications 1 à 8, dans laquelle l'agent de compatibilité (c) présente un taux d'hydrogénation de 90 % ou plus.

**10.** Composition de résine selon l'une quelconque des revendications 1 à 9, dans laquelle une quantité de liaison vinyle contenue dans l'agent de compatibilité (c) est supérieure à 50 %.

**11.** Composition de résine selon l'une quelconque des revendications 1 à 10, présentant une teneur en élément phosphore de 0,3 % en masse ou moins.

**12.** Composition de résine selon l'une quelconque des revendications 1 à 11, dans laquelle une phase contenant la résine d'éther de polyphénylène (a) forme une phase dispersée, et une phase contenant la résine de polypropylène (b) forme une phase de matrice.

**13.** Composition de résine selon la revendication 12, dans laquelle un diamètre moyen de petit axe de la phase contenant la résine d'éther de polyphénylène (a) est de 10 nm ou plus et de 1 μm ou moins.

**14.** Composition de résine selon la revendication 12 ou 13, dans laquelle dans 10 ou plus de 100 des phases contenant la résine d'éther de polyphénylène (a), une phase linéaire contenant l'agent de compatibilité (c) présentant une longueur de 75 nm ou plus est contenue à l'intérieur de la phase contenant la résine d'éther de polyphénylène (a).

**15.** Produit moulé obtenu par moulage de la composition de résine selon l'une quelconque des revendications 1 à 14.

**16.** Produit moulé selon la revendication 15, qui est une pièce d'application électrique ou électronique pour automobiles, ou une pièce de plomberie.

FIG. 1

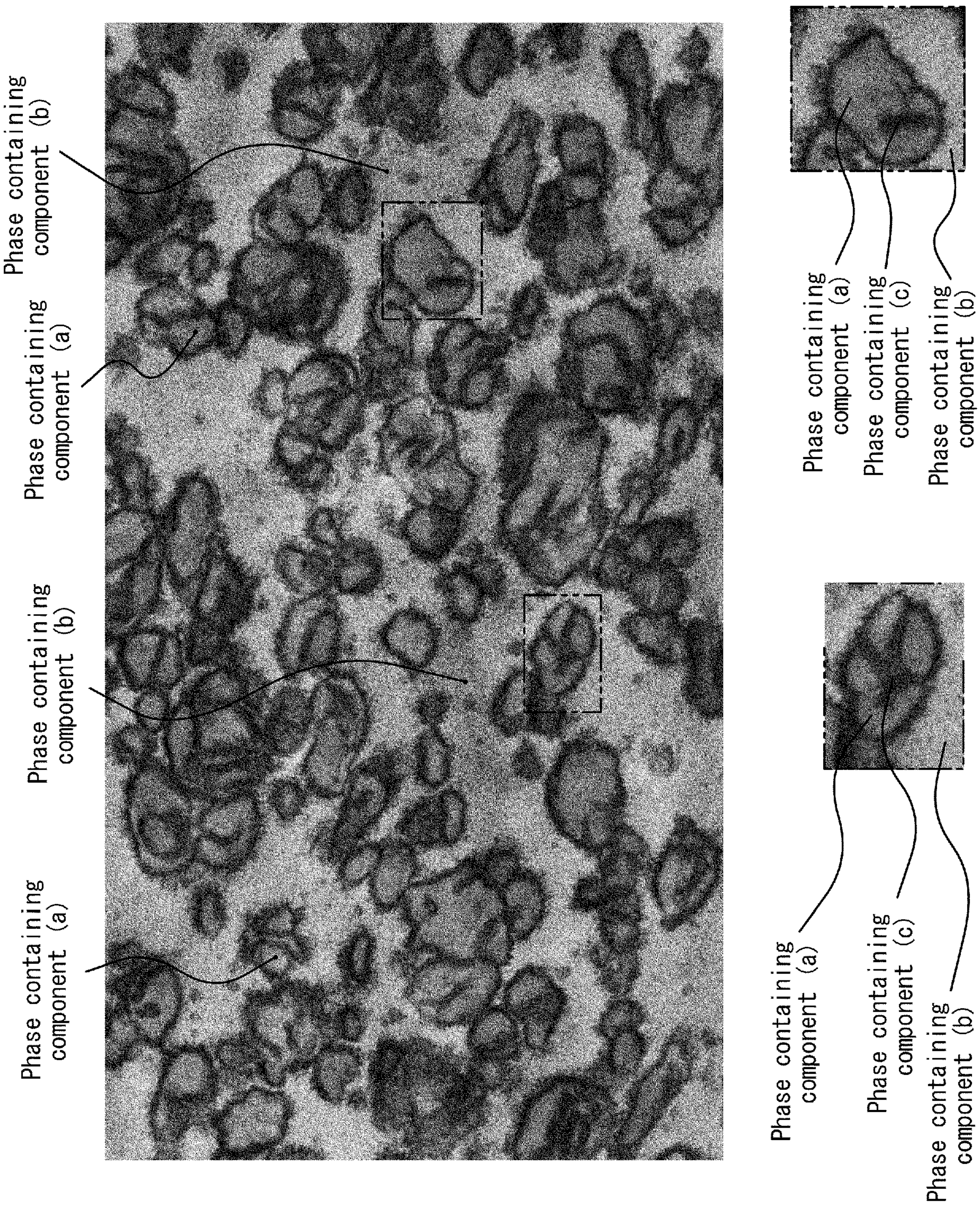
Phase containing component (b)
Phase containing component (a)
Phase containing component (b)
Phase containing component (a)
Phase containing component (a)
Phase containing component (c)
Phase containing component (b)
Phase containing component (a)
Phase containing component (c)
Phase containing component (b)

FIG. 2

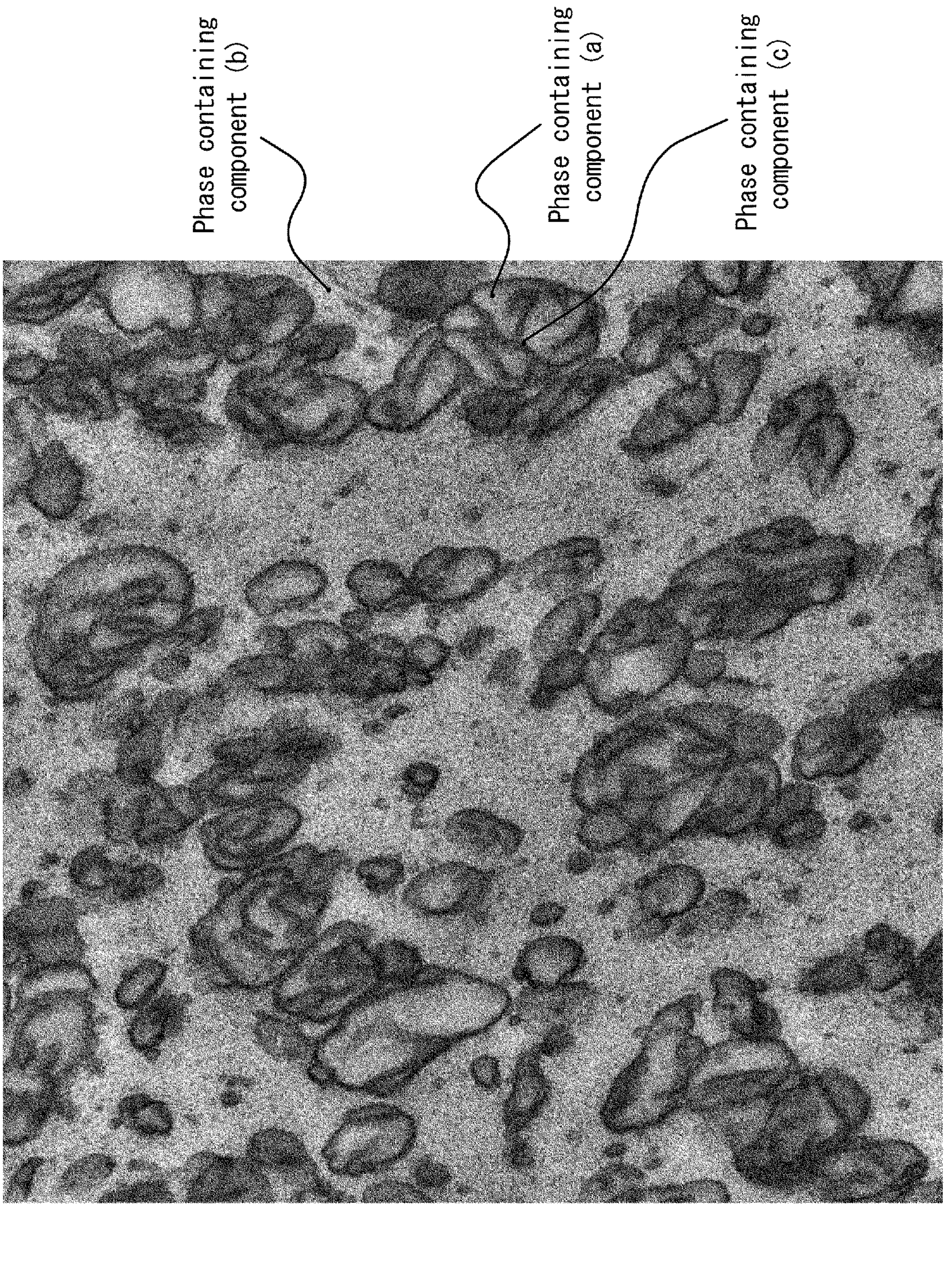
Phase containing component (b)
Phase containing component (a)
Phase containing component (c)

FIG. 3

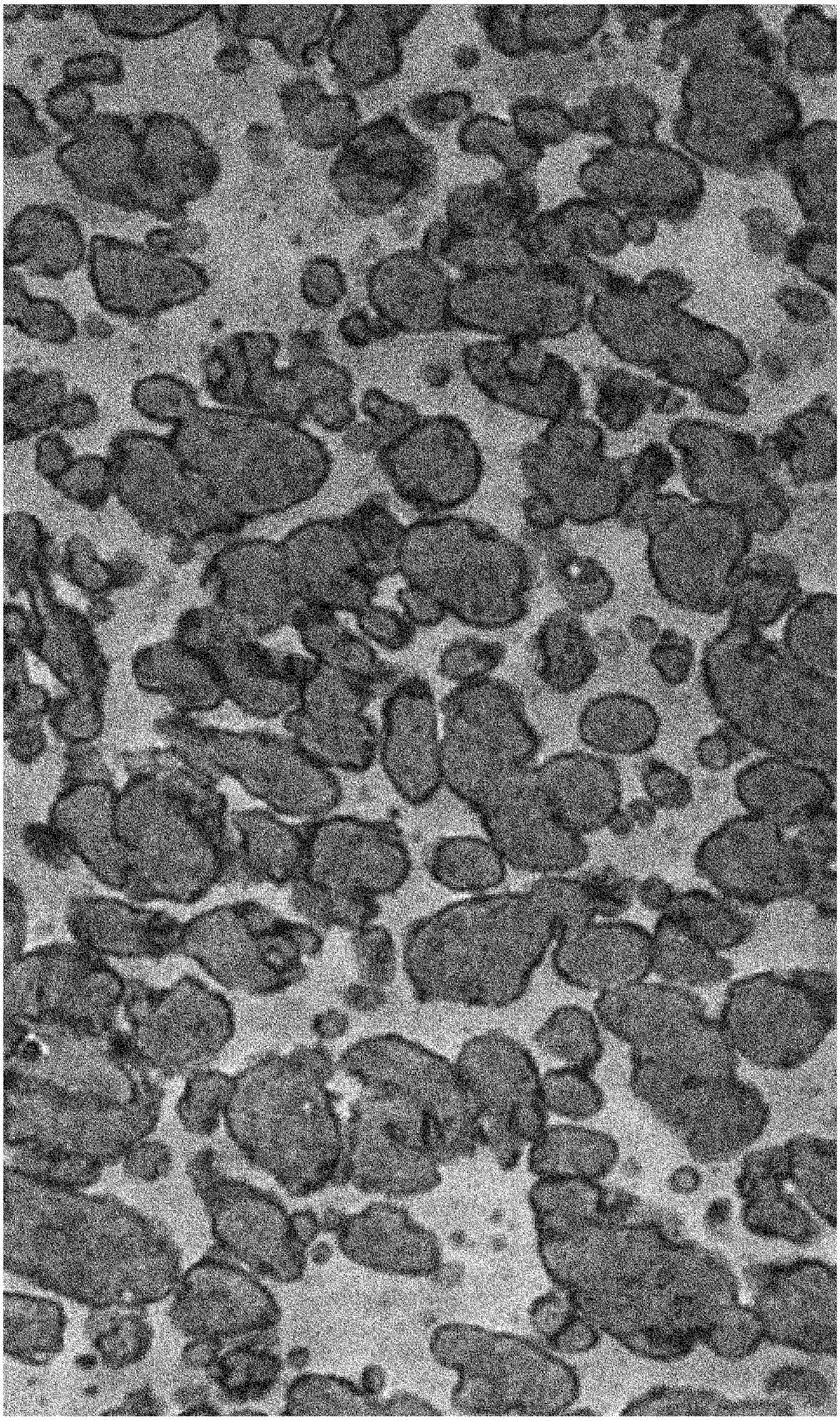

FIG. 4

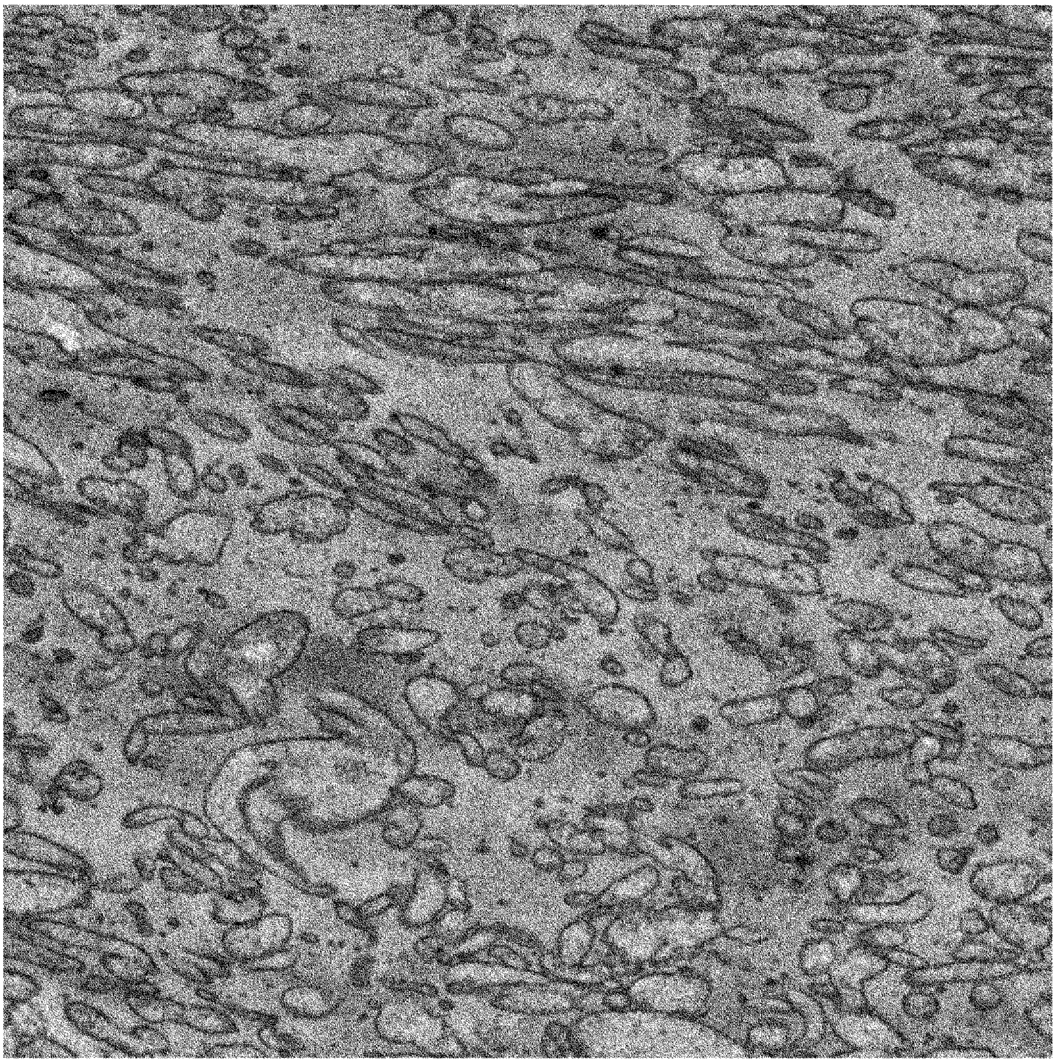

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3361851 A
- US 4383082 A
- EP 0115712 A
- JP S63113058 A
- JP S63225642 A
- US 4863997 A
- JP H0372512 A
- JP H04183748 A
- JP H05320471 A
- EP 1148097 A1
- US 2018057671 A1
- JP 2016172842 A
- JP 2016053116 A
- JP 2015218285 A
- JP 2017137380 A
- US 4675423 A
- JP 52017880 B
- US 3306874 A
- US 3306875 A
- US 3257357 A
- US 3257358 A
- JP S5051197 A
- JP S5217880 B
- JP S63152628 B
- JP S47011486 A
- JP S49066743 A
- JP S50075651 A
- JP S54126255 A
- JP S56010542 A
- JP S56062847 A
- JP S56100840 A
- JP H02300218 A
- GB 1130770 A
- US 3281383 A
- US 3639517 A
- GB 1020720 A
- US 3333024 A
- US 4501857 A
- JP S601241 A
- JP H0959475 A

### Non-patent literature cited in the description

- *Analytical Chemistry,* August 1949, vol. 21 (8
- *CHEMICAL ABSTRACTS,* 11099-03-9
- *CHEMICAL ABSTRACTS,* 8005-20-5/101357-15-7
- *CHEMICAL ABSTRACTS,* 8005-03-6/68510-98-5